# EUROPEAN PATENT APPLICATION

(11) **EP 4 782 959 A1**
(43) Date of publication of application: **29.07.2026**
(21) Application number: 26153630.4
(22) Date of filing: 22.01.2026
(51) Int. Cl.: G06F 1/16, G06F 3/01, G06F 3/0481, G06V 10/70

(54) **SYSTEMS AND METHODS OF INVOKING AN ARTIFICIALLY INTELLIGENT AGENT AT A WRIST-WEARABLE DEVICE**

(30) Priority: 23.01.2025 US 202563748930 P; 19.01.2026 US 202619452871
(71) Applicant: Meta Platforms Technologies, LLC, Menlo Park, CA 94025 (US)
(72) Inventor: HUANG, Willy, Menlo Park, 94025 (US); GARY, Scott, Menlo Park, 94025 (US); ROS, Felix Cornelis, Menlo Park, 94025 (US); FOLEY, Lauren, Menlo Park, 94025 (US); LAUFBAHN, Mike, Menlo Park, 94025 (US)
(74) Representative: Murgitroyd & Company

(57) **Abstract**

Systems and methods for interacting with an artificially intelligent agent at a wrist-wearable device are described. An example method includes detecting an invocation of an artificially intelligent agent, the invocation based on data associated with neuromuscular signals sensed by one or more biopotential sensors, causing capture of image data using one or more cameras included on a head-wearable device, the image data including a real-world object, providing the image data to the artificially intelligent agent, presenting, at a display of a wrist-wearable device: a representation of the real-world object and a dialogue message generated by the artificially intelligent agent, the dialogue message generated based on an object type of the real-world object and a selected set of pre-defined user-specific preferences associated with the object type of the real-world object.

## Description

### RELATED APPLICATIONS

This application claim priority to U.S. Prov. App. No. 63/748,930, filed on January 23, 2025, entitled "Systems and Methods of Invoking an Artificially Intelligent Agent at a Wrist-Wearable Device".

### TECHNICAL FIELD

This relates generally to artificially intelligent agents, more specifically, an artificially intelligent agent invoked at a wrist-wearable device and dialogue messages generated by the artificially intelligent agent and presented by the wrist-wearable device.

### BACKGROUND

Artificially intelligent assistants and models have limited applications on wearable devices. Artificially intelligent assistants and models on wearable devices can have considerable latency, which negatively impact user experience. Additionally, artificially intelligent assistants and models have considerable user friction (e.g., reaching for a phone and/or using both hands to provide a prompt or additional information), decreasing their use.

As such, there is a need to address one or more of the above-identified challenges. A brief summary of solutions to the issues noted above are described below.

### SUMMARY

The present invention provides a non-transitory computer-readable storage medium and a method for operating an artificially intelligent agent invoked at a wrist-wearable device and dialogue messages generated by the artificially intelligent agent and presented by the wrist-wearable device as defined in the appended claims.

In accordance with a first aspect, there is provided a non-transitory computer-readable storage medium including executable instructions that, when executed by one or more processors communicatively coupled with a wrist-wearable device, cause the one or more processors to:
detect an invocation of an artificially intelligent (AI) agent, the invocation based on data associated with neuromuscular signals sensed by one or more biopotential sensors;
in response to detecting the invocation, cause a displayless head-wearable device to capture first image data using one or more cameras provided on the displayless head-wearable device, the first image data comprising a first real-world object;
provide the first image data to the AI agent;
present, at a display of the wrist-wearable device:
   a representation of the first real-world object; and
   a first dialogue message generated by the AI agent, the first dialogue message generated based on a first object type of the first real-world object and a selected set of pre-defined user-specific preferences associated with the first object type of the first real-world object;
detect a second invocation of the AI agent, the second invocation based on second data associated with neuromuscular signals sensed by the one or more biopotential sensors;
in response to detecting the second invocation, cause the displayless head-wearable device to capture second image data using the one or more cameras, the second image data comprising a second real-world object, distinct from the first real-world object;
provide the second image data to the AI agent;
present, at the display of the wrist-wearable device:
   a representation of the second real-world object; and
   a second dialogue message generated by the AI agent, the second dialogue message generated based on a second object type, distinct from the first object type, of the second real-world object and a second selected set of pre-defined user-specific preferences, distinct from the selected set of pre-defined user-specific preferences, associated with the second object type of the second real-world object.

The executable instructions, when executed, may further cause the one or more processors to:
before providing the first image data to the AI agent, receive a user message from a user of the wrist-wearable device regarding the first real-world object;
provide the user message to the AI agent; and
wherein the first dialogue message is further generated based on the user message.

The user message may modify the selected set of pre-defined user-specific preferences.

The user message may comprise a request to identify the first real-world object; and
the first dialogue message comprises an identification of the first real-world object.

The first image data may further comprise a different real-world object, distinct from the first real-world object;
the user message comprises an indication that the user is interested in the different real-world object, not the first real-world object; and
the executable instructions, when executed, further cause the one or more processors to:
   forgo presentation of the representation of the first real-world object and the first dialogue message;
   present, at the display of the wrist-wearable device:
      a representation of the different real-world object; and
      a different dialogue message generated by the AI agent, the different dialogue message generated based on a different object type of the different real-world object and a different selected set of pre-defined user-specific preferences associated with the different object type of the different real-world object.

The user message may comprise an indication that the user is interested in an additional real-world object, distinct from the first real-world object, wherein the additional real-world object is not included in the first image data; and
the executable instructions, when executed, further cause the one or more processors to:
cause the displayless head-wearable device to capture additional image data using the one or more cameras provided on the displayless head-wearable device, the additional image data comprising the additional real-world object;
provide the additional image data to the AI agent;
present, at the display of the wrist-wearable device:
   an additional representation of the additional real-world object; and
   an additional dialogue message generated by the AI agent, the additional dialogue message generated based on an additional object type of the additional real-world object and an additional selected set of pre-defined user-specific preferences associated with the additional object type of the additional real-world object.

The representation of the first real-world object may comprise an indication of the first object type; and
the executable instructions, when executed, further cause the one or more processors to:
after presenting the representation of the first real-world object and the first dialogue message on the display of the wrist-wearable device, receive a user input indicating that the first object type is incorrectly associated with the first real-world object;
present, at the display of the wrist-wearable device:
   a revised representation of the first real-world object, distinct from the representation of the first real-world object; and
   a revised dialogue message generated by the AI agent, the revised dialogue message generated based on a revised object type of the first real-world object, the revised object type distinct from the first object type, and a revised selected set of pre-defined user-specific preferences associated with the revised object type of the first real-world object.

The first dialogue message may comprise a suggestion to perform a follow-up user input;
the executable instructions, when executed, further cause the one or more processors to:
receive a user input comprising the follow-up user input; and
perform a command based on the follow-up user input.

The executable instructions, when executed, may further cause the one or more processors to:
detect a third invocation of the AI agent, the third invocation based on third data associated with neuromuscular signals sensed by the one or more biopotential sensors;
in response to detecting the third invocation, cause the displayless head-wearable device to capture third image data using the one or more cameras, the third image data comprising a third real-world object, distinct from the first real-world object and the second real-world object;
in accordance with the third real-world object being captured for a threshold amount of time:
   provide the third image data to the AI agent;
   present, at the display of the wrist-wearable device:
      a representation of the third real-world object; and
      a third dialogue message generated by the AI agent, the third dialogue message generated based on a third object type, distinct from the first object type and the second object type, of the third real-world object and a third selected set of pre-defined user-specific preferences associated with the third object type of the third real-world object.

The first dialogue message may comprise an ordered list of messages, an order of the ordered list of messages determined by the AI agent, ordered based on a likelihood that a user of the wrist-wearable device selects messages of the ordered list of messages.

The executable instructions, when executed, may further cause the one or more processors to:
present, at the display of the wrist-wearable device, a visual representation of the selected set of pre-defined user-specific preferences.

The displayless head-wearable device may be a pair of displayless smart glasses; and
the wrist-wearable device is a smart watch.

The one or more cameras may capture a field of view of a user of the displayless head-wearable device.

A non-transitory computer-readable storage medium comprising executable instructions that, when executed by one or more processors communicatively coupled with a displayless head-wearable device, cause the one or more processors to:
in response to detecting an invocation of an artificially intelligent (AI) agent, the invocation based on data associated with neuromuscular signals sensed by one or more biopotential sensors, capture first image data using one or more cameras provided on the displayless head-wearable device, the first image data comprising a first real-world object;
provide the first image data, to the AI agent;
cause presentation of, at a display of a wrist-wearable device:
   a representation of the first real-world object; and
   a first dialogue message generated by the AI agent, the first dialogue message generated based on a first object type of the first real-world object and a selected set of pre-defined user-specific preferences associated with the first object type of the first real-world object;
in response to detecting a second invocation of the AI agent, the second invocation based on second data associated with neuromuscular signals sensed by the one or more biopotential sensors, capture second image data using the one or more cameras, the second image data comprising a second real-world object, distinct from the first real-world object;
provide the second image data to the AI agent;
cause presentation of, at the display of the wrist-wearable device:
   a representation of the second real-world object; and
   a second dialogue message generated by the AI agent, the second dialogue message generated based on a second object type, distinct from the first object type, of the second real-world object and a second selected set of pre-defined user-specific preferences associated with the second object type of the second real-world object.

The executable instructions, when executed, may further cause the one or more processors to:
in response to detecting a third invocation of the AI agent, the invocation based on third data associated with neuromuscular signals sensed by the one or more biopotential sensors, capture third image data, the third image data comprising a third real-world object, distinct from the first real-world object and the second real-world object;
provide the third image data to the AI agent;
cause presentation of, at the display of the wrist-wearable device:
   a representation of the third real-world object; and
   a third dialogue message generated by the AI agent, the third dialogue message generated based on a third object type, distinct from the first object type and the second object type, of the third real-world object and a third selected set of pre-defined user-specific preferences associated with the third object type of the third real-world object.

The executable instructions, when executed, may further cause the one or more processors to:
before providing the first image data to the AI agent, receive a user message regarding the first real-world object; and
provide the user message to the AI agent; and
wherein the first dialogue message is further generated based on the user message.

The first dialogue message may comprise a suggestion to perform a follow-up user input;

the executable instructions, when executed, further cause the one or more processors to:
receive a user input comprising the follow-up user input; and
perform a command based on the follow-up user input.

A method, comprising:
detecting an invocation of an artificially intelligent (AI) agent, the invocation based on data associated with neuromuscular signals sensed by one or more biopotential sensors;
causing capture of first image data using one or more cameras provided on a head-wearable device, the first image data comprising a first real-world object;
providing the first image data to the AI agent;
presenting, at a display of a wrist-wearable device:
   a representation of the first real-world object; and
   a first dialogue message generated by the AI agent, the first dialogue message generated based on a first object type of the first real-world object and a selected set of pre-defined user-specific preferences associated with the first object type of the first real-world object;
detecting a second invocation of the AI agent, the second invocation based on second data associated with neuromuscular signals sensed by the one or more biopotential sensors;
causing capture of second image data using the one or more cameras, the second image data comprising a second real-world object, distinct from the first real-world object;
providing the second image data to the AI agent;
presenting, at the display of the wrist-wearable device:
   a representation of the second real-world object; and
   a second dialogue message generated by the AI agent, the second dialogue message generated based on a second object type, distinct from the first object type, of the second real-world object and a second selected set of pre-defined user-specific preferences, distinct from the selected set of pre-defined user-specific preferences, associated with the second object type of the second real-world object.

The method may further comprise:
before providing the first image data to the AI agent, receiving a user message regarding the first real-world object; and
providing the user message to the AI agent; and
wherein the first dialogue message is further generated based on the user message.

The method may further comprise:
detecting a third invocation of the AI agent, the invocation based on third data associated with neuromuscular signals sensed by the one or more biopotential sensors;
causing capture of third image data using the one or more cameras, the third image data comprising a third real-world object, distinct from the first real-world object and the second real-world object;
in accordance with the third real-world object being captured for a threshold amount of time:
   providing the third image data to the AI agent;
   presenting, at the display of the wrist-wearable device:
      a representation of the third real-world object; and
      a third dialogue message generated by the AI agent, the third dialogue message generated based on a third object type, distinct from the first object type and the second object type, of the third real-world object and a third selected set of pre-defined user-specific preferences associated with the third object type of the third real-world object.

The systems and method disclosed herein provide wearable devices that can quickly and silently learning about and act on things near a user and throughout the user's day. The systems and method disclosed herein allow users to quickly search, save, and act on their surroundings. One example of a wrist-wearable device for invoking an invocation of an artificially intelligent (AI) agent at a wearable device is described herein. This example wrist-wearable device includes one or more cameras, one or more displays, and one or more programs, where the one or more programs are stored in memory and configured to be executed by one or more processors. The one or more programs including instructions for performing operations. The operations include, in response to detecting invocation of an AI agent, providing first sensor data to the AI agent, and presenting, at the wrist-wearable device, a first dialogue message generated by the AI agent. The first dialogue message is based, in part, on the first sensor data. The operations also include, in response to a user query responsive to the first dialogue message, providing second sensor data to the AI agent, and presenting, at the wrist-wearable device, a second dialogue message generated by the AI agent. The second dialogue message is i) responsive to the user query and ii) based, in part, on the user query and the second sensor data.

The devices and/or systems described herein can be configured to include instructions that cause the performance of methods and operations associated with invocation of an AI agent at a wearable device, such as a wrist-wearable device. These methods and operations can be stored on a non-transitory computer-readable storage medium of a wearable device or a system including a wearable device. It is also noted that the devices and systems described herein can be part of a larger, overarching system that includes multiple devices. A non-exhaustive of list of electronic devices that can, either alone or in combination (e.g., a system), include instructions that cause the performance of methods and operations associated with invocation of an AI agent at a wearable device, such as a wrist-wearable device (or, in some embodiments, an extended-reality headset (e.g., a mixed-reality (MR) headset or a pair of augmented-reality (AR) glasses as two examples), an intermediary processing device, etc.). For example, when a wrist-wearable device is described, it is understood that the wrist-wearable device can be in communication with one or more other devices (e.g., a head-wearable device, a server, intermediary processing device) which together can include instructions for performing methods and operations associated with invocation of an AI agent at a wearable device (i.e., wrist-wearable device). Multiple combinations with different related devices are envisioned, but not recited for brevity.

The features and advantages described in the specification are not necessarily all inclusive and, in particular, certain additional features and advantages will be apparent to one of ordinary skill in the art in view of the drawings, specification, and claims. Moreover, it should be noted that the language used in the specification has been principally selected for readability and instructional purposes.

It will be appreciated that any features described herein as being suitable for incorporation into one or more aspects are intended to be generalizable across any and all aspects described herein. Other aspects can be understood by those skilled in the art in light of the description, the claims and the drawings. The foregoing general description and the following detailed description are exemplary and explanatory only and are not restrictive of the claims

Having summarized the above example aspects, a brief description of the drawings will now be presented.

### BRIEF DESCRIPTION OF THE DRAWINGS

For a better understanding of the various described embodiments, reference should be made to the Detailed Description below, in conjunction with the following drawings in which like reference numerals refer to corresponding parts throughout the figures.
Figures 1A-1H illustrate invocation of an artificially intelligent agent at a wrist-wearable device, in accordance with some embodiments.
Figures 1I-1T illustrate interactions of an artificially intelligent agent with different wearable devices, in accordance with some embodiments.
Figures 2A-2D illustrate user inputs for interacting with an artificially intelligent agent presented at a wrist-wearable device, in accordance with some embodiments.
Figures 3A-3D illustrate user inputs for interacting with an artificially intelligent agent presented at a wrist-wearable device, in accordance with some embodiments.
Figures 4A-4D illustrate user inputs invoking an artificially intelligent agent at a wrist-wearable device, in accordance with some embodiments.
Figures 5A-5D illustrate additional user inputs invoking an artificially intelligent agent at a wrist-wearable device, in accordance with some embodiments.
Figures 6A and 6B illustrate example recall dialogue messages generated by an artificially intelligent agent, in accordance with some embodiments.
Figure 7 illustrates example watch-face user interfaces including an artificially intelligent agent, in accordance with some embodiments.
Figure 8A shows an example method flow chart for invoking an artificially intelligent agent at a wrist-wearable device, in accordance with some embodiments.
Figure 8B illustrates a diagram of relative timing for invoking an artificially intelligent agent at a wrist-wearable device, in accordance with some embodiments.
Figures 9A and 9B illustrate user inputs invoking an artificially intelligent agent at a wrist-wearable device, in accordance with some embodiments.
Figures 10A and 10B illustrate user inputs invoking an artificially intelligent agent at a head-wearable device and the artificially intelligent agent generating an output at a wrist-wearable device, in accordance with some embodiments.
Figure 11A illustrates user inputs invoking an artificially intelligent agent at a wrist-wearable device, in accordance with some embodiments.
Figure 11B illustrates user inputs responding to an invocation of an artificially intelligent agent at a head-wearable device, in accordance with some embodiments.
Figure 12A illustrates user inputs invoking an artificially intelligent agent at a wrist-wearable device, in accordance with some embodiments.
Figure 12B illustrates user inputs responding to an invocation of an artificially intelligent agent at a head-wearable device, in accordance with some embodiments.
Figure 13A illustrates user inputs invoking an artificially intelligent agent at a wrist-wearable device, in accordance with some embodiments.
Figure 13B illustrates an artificially intelligent agent at a wrist-wearable device generating a response to a user input, in accordance with some embodiments.
Figure 14 shows an example method flow chart for invoking an artificially intelligent agent at a wrist-wearable device, in accordance with some embodiments.
Figures 15A, 15B, 15C-1, and 15C-2 illustrate example MR and AR systems, in accordance with some embodiments.

In accordance with common practice, the various features illustrated in the drawings may not be drawn to scale. Accordingly, the dimensions of the various features may be arbitrarily expanded or reduced for clarity. In addition, some of the drawings may not depict all of the components of a given system, method, or device. Finally, like reference numerals may be used to denote like features throughout the specification and figures.

### DETAILED DESCRIPTION

Numerous details are described herein to provide a thorough understanding of the example embodiments illustrated in the accompanying drawings. However, some embodiments may be practiced without many of the specific details, and the scope of the claims is only limited by those features and aspects specifically recited in the appended claims. Furthermore, well-known processes, components, and materials have not necessarily been described in exhaustive detail so as to avoid obscuring pertinent aspects of the embodiments described herein.

### Overview

Embodiments of this disclosure can include or be implemented in conjunction with various types of extended-realities (XRs) such as mixed-reality (MR) and augmented-reality (AR) systems. MRs and ARs, as described herein, are any superimposed functionality and/or sensory-detectable presentation provided by MR and AR systems within a user's physical surroundings. Such MRs can include and/or represent virtual realities (VRs) and VRs in which at least some aspects of the surrounding environment are reconstructed within the virtual environment (e.g., displaying virtual reconstructions of physical objects in a physical environment to avoid the user colliding with the physical objects in a surrounding physical environment). In the case of MRs, the surrounding environment that is presented through a display is captured via one or more sensors configured to capture the surrounding environment (e.g., a camera sensor, time-of-flight (ToF) sensor). While a wearer of an MR headset can see the surrounding environment in full detail, they are seeing a reconstruction of the environment reproduced using data from the one or more sensors (i.e., the physical objects are not directly viewed by the user). An MR headset can also forgo displaying reconstructions of objects in the physical environment, thereby providing a user with an entirely VR experience. An AR system, on the other hand, provides an experience in which information is provided, e.g., through the use of a waveguide, in conjunction with the direct viewing of at least some of the surrounding environment through a transparent or semitransparent waveguide(s) and/or lens(es) of the AR glasses. Throughout this application, the term "extended reality (XR)" is used as a catchall term to cover both ARs and MRs. In addition, this application also uses, at times, a head-wearable device or headset device as a catchall term that covers XR headsets such as AR glasses and MR headsets.

As alluded to above, an MR environment, as described herein, can include, but is not limited to, non-immersive, semi-immersive, and fully immersive VR environments. As also alluded to above, AR environments can include marker-based AR environments, markerless AR environments, location-based AR environments, and projection-based AR environments. The above descriptions are not exhaustive and any other environment that allows for intentional environmental lighting to pass through to the user would fall within the scope of an AR, and any other environment that does not allow for intentional environmental lighting to pass through to the user would fall within the scope of an MR.

The AR and MR content can include video, audio, haptic events, sensory events, or some combination thereof, any of which can be presented in a single channel or in multiple channels (such as stereo video that produces a three-dimensional effect to a viewer). Additionally, AR and MR can also be associated with applications, products, accessories, services, or some combination thereof, which are used, for example, to create content in an AR or MR environment and/or are otherwise used in (e.g., to perform activities in) AR and MR environments.

Interacting with these AR and MR environments described herein can occur using multiple different modalities and the resulting outputs can also occur across multiple different modalities. In one example AR or MR system, a user can perform a swiping in-air hand gesture to cause a song to be skipped by a song-providing application programming interface (API) providing playback at, for example, a home speaker.

A hand gesture, as described herein, can include an in-air gesture, a surface-contact gesture, and or other gestures that can be detected and determined based on movements of a single hand (e.g., a one-handed gesture performed with a user's hand that is detected by one or more sensors of a wearable device (e.g., electromyography (EMG) and/or inertial measurement units (IMUs) of a wrist-wearable device, and/or one or more sensors included in a smart textile wearable device) and/or detected via image data captured by an imaging device of a wearable device (e.g., a camera of a head-wearable device, an external tracking camera setup in the surrounding environment)). "In-air" generally includes gestures in which the user's hand does not contact a surface, object, or portion of an electronic device (e.g., a head-wearable device or other communicatively coupled device, such as the wrist-wearable device), in other words the gesture is performed in open air in 3D space and without contacting a surface, an object, or an electronic device. Surface-contact gestures (contacts at a surface, object, body part of the user, or electronic device) more generally are also contemplated in which a contact (or an intention to contact) is detected at a surface (e.g., a single- or double-finger tap on a table, on a user's hand or another finger, on the user's leg, a couch, a steering wheel). The different hand gestures disclosed herein can be detected using image data and/or sensor data (e.g., neuromuscular signals sensed by one or more biopotential sensors (e.g., EMG sensors) or other types of data from other sensors, such as proximity sensors, ToF sensors, sensors of an IMU, capacitive sensors, strain sensors) detected by a wearable device worn by the user and/or other electronic devices in the user's possession (e.g., smartphones, laptops, imaging devices, intermediary devices, and/or other devices described herein).

The input modalities as alluded to above can be varied and are dependent on a user's experience. For example, in an interaction in which a wrist-wearable device is used, a user can provide inputs using in-air or surface-contact gestures that are detected using neuromuscular signal sensors of the wrist-wearable device. In the event that a wrist-wearable device is not used, alternative and entirely interchangeable input modalities can be used instead, such as camera(s) located on the headset/glasses or elsewhere to detect in-air or surface-contact gestures or inputs at an intermediary processing device (e.g., through physical input components (e.g., buttons and trackpads)). These different input modalities can be interchanged based on both desired user experiences, portability, and/or a feature set of the product (e.g., a low-cost product may not include hand-tracking cameras).

While the inputs are varied, the resulting outputs stemming from the inputs are also varied. For example, an in-air gesture input detected by a camera of a head-wearable device can cause an output to occur at a head-wearable device or control another electronic device different from the head-wearable device. In another example, an input detected using data from a neuromuscular signal sensor can also cause an output to occur at a head-wearable device or control another electronic device different from the head-wearable device. While only a couple examples are described above, one skilled in the art would understand that different input modalities are interchangeable along with different output modalities in response to the inputs.

Specific operations described above may occur as a result of specific hardware. The devices described are not limiting and features on these devices can be removed or additional features can be added to these devices. The different devices can include one or more analogous hardware components. For brevity, analogous devices and components are described herein. Any differences in the devices and components are described below in their respective sections.

As described herein, a processor (e.g., a central processing unit (CPU) or microcontroller unit (MCU)), is an electronic component that is responsible for executing instructions and controlling the operation of an electronic device (e.g., a wrist-wearable device, a head-wearable device, a handheld intermediary processing device (HIPD), a smart textile-based garment, or other computer system). There are various types of processors that may be used interchangeably or specifically required by embodiments described herein. For example, a processor may be (i) a general processor designed to perform a wide range of tasks, such as running software applications, managing operating systems, and performing arithmetic and logical operations; (ii) a microcontroller designed for specific tasks such as controlling electronic devices, sensors, and motors; (iii) a graphics processing unit (GPU) designed to accelerate the creation and rendering of images, videos, and animations (e.g., VR animations, such as three-dimensional modeling); (iv) a field-programmable gate array (FPGA) that can be programmed and reconfigured after manufacturing and/or customized to perform specific tasks, such as signal processing, cryptography, and machine learning; or (v) a digital signal processor (DSP) designed to perform mathematical operations on signals such as audio, video, and radio waves. One of skill in the art will understand that one or more processors of one or more electronic devices may be used in various embodiments described herein.

As described herein, controllers are electronic components that manage and coordinate the operation of other components within an electronic device (e.g., controlling inputs, processing data, and/or generating outputs). Examples of controllers can include (i) microcontrollers, including small, low-power controllers that are commonly used in embedded systems and Internet of Things (IoT) devices; (ii) programmable logic controllers (PLCs) that may be configured to be used in industrial automation systems to control and monitor manufacturing processes; (iii) system-on-a-chip (SoC) controllers that integrate multiple components such as processors, memory, I/O interfaces, and other peripherals into a single chip; and/or (iv) DSPs. As described herein, a graphics module is a component or software module that is designed to handle graphical operations and/or processes and can include a hardware module and/or a software module.

As described herein, memory refers to electronic components in a computer or electronic device that store data and instructions for the processor to access and manipulate. The devices described herein can include volatile and non-volatile memory. Examples of memory can include (i) random access memory (RAM), such as DRAM, SRAM, DDR RAM or other random access solid state memory devices, configured to store data and instructions temporarily; (ii) read-only memory (ROM) configured to store data and instructions permanently (e.g., one or more portions of system firmware and/or boot loaders); (iii) flash memory, magnetic disk storage devices, optical disk storage devices, other non-volatile solid state storage devices, which can be configured to store data in electronic devices (e.g., universal serial bus (USB) drives, memory cards, and/or solid-state drives (SSDs)); and (iv) cache memory configured to temporarily store frequently accessed data and instructions. Memory, as described herein, can include structured data (e.g., SQL databases, MongoDB databases, GraphQL data, or JSON data). Other examples of memory can include (i) profile data, including user account data, user settings, and/or other user data stored by the user; (ii) sensor data detected and/or otherwise obtained by one or more sensors; (iii) media content data including stored image data, audio data, documents, and the like; (iv) application data, which can include data collected and/or otherwise obtained and stored during use of an application; and/or (v) any other types of data described herein.

As described herein, a power system of an electronic device is configured to convert incoming electrical power into a form that can be used to operate the device. A power system can include various components, including (i) a power source, which can be an alternating current (AC) adapter or a direct current (DC) adapter power supply; (ii) a charger input that can be configured to use a wired and/or wireless connection (which may be part of a peripheral interface, such as a USB, micro-USB interface, near-field magnetic coupling, magnetic inductive and magnetic resonance charging, and/or radio frequency (RF) charging); (iii) a power-management integrated circuit, configured to distribute power to various components of the device and ensure that the device operates within safe limits (e.g., regulating voltage, controlling current flow, and/or managing heat dissipation); and/or (iv) a battery configured to store power to provide usable power to components of one or more electronic devices.

As described herein, peripheral interfaces are electronic components (e.g., of electronic devices) that allow electronic devices to communicate with other devices or peripherals and can provide a means for input and output of data and signals. Examples of peripheral interfaces can include (i) USB and/or micro-USB interfaces configured for connecting devices to an electronic device; (ii) Bluetooth interfaces configured to allow devices to communicate with each other, including Bluetooth low energy (BLE); (iii) near-field communication (NFC) interfaces configured to be short-range wireless interfaces for operations such as access control; (iv) pogo pins, which may be small, spring-loaded pins configured to provide a charging interface; (v) wireless charging interfaces; (vi) global-positioning system (GPS) interfaces; (vii) Wi-Fi interfaces for providing a connection between a device and a wireless network; and (viii) sensor interfaces.

As described herein, sensors are electronic components (e.g., in and/or otherwise in electronic communication with electronic devices, such as wearable devices) configured to detect physical and environmental changes and generate electrical signals. Examples of sensors can include (i) imaging sensors for collecting imaging data (e.g., including one or more cameras disposed on a respective electronic device, such as a simultaneous localization and mapping (SLAM) camera); (ii) biopotential-signal sensors; (iii) IMUs for detecting, for example, angular rate, force, magnetic field, and/or changes in acceleration; (iv) heart rate sensors for measuring a user's heart rate; (v) peripheral oxygen saturation (SpO₂) sensors for measuring blood oxygen saturation and/or other biometric data of a user; (vi) capacitive sensors for detecting changes in potential at a portion of a user's body (e.g., a sensor-skin interface) and/or the proximity of other devices or objects; (vii) sensors for detecting some inputs (e.g., capacitive and force sensors); and (viii) light sensors (e.g., ToF sensors, infrared light sensors, or visible light sensors), and/or sensors for sensing data from the user or the user's environment. As described herein biopotential-signal-sensing components are devices used to measure electrical activity within the body (e.g., biopotential-signal sensors). Some types of biopotential-signal sensors include (i) electroencephalography (EEG) sensors configured to measure electrical activity in the brain to diagnose neurological disorders; (ii) electrocardiography (ECG or EKG) sensors configured to measure electrical activity of the heart to diagnose heart problems; (iii) EMG sensors configured to measure the electrical activity of muscles and diagnose neuromuscular disorders; (iv) electrooculography (EOG) sensors configured to measure the electrical activity of eye muscles to detect eye movement and diagnose eye disorders.

As described herein, an application stored in memory of an electronic device (e.g., software) includes instructions stored in the memory. Examples of such applications include (i) games; (ii) word processors; (iii) messaging applications; (iv) media-streaming applications; (v) financial applications; (vi) calendars; (vii) clocks; (viii) web browsers; (ix) social media applications; (x) camera applications; (xi) web-based applications; (xii) health applications; (xiii) AR and MR applications; and/or (xiv) any other applications that can be stored in memory. The applications can operate in conjunction with data and/or one or more components of a device or communicatively coupled devices to perform one or more operations and/or functions.

As described herein, communication interface modules can include hardware and/or software capable of data communications using any of a variety of custom or standard wireless protocols (e.g., IEEE 802.15.4, Wi-Fi, ZigBee, 6LoWPAN, Thread, Z-Wave, Bluetooth Smart, ISA100.11a, WirelessHART, or MiWi), custom or standard wired protocols (e.g., Ethernet or HomePlug), and/or any other suitable communication protocol, including communication protocols not yet developed as of the filing date of this document. A communication interface is a mechanism that enables different systems or devices to exchange information and data with each other, including hardware, software, or a combination of both hardware and software. For example, a communication interface can refer to a physical connector and/or port on a device that enables communication with other devices (e.g., USB, Ethernet, HDMI, or Bluetooth). A communication interface can refer to a software layer that enables different software programs to communicate with each other (e.g., APIs and protocols such as HTTP and TCP/IP).

As described herein, a graphics module is a component or software module that is designed to handle graphical operations and/or processes and can include a hardware module and/or a software module.

As described herein, non-transitory computer-readable storage media are physical devices or storage medium that can be used to store electronic data in a non-transitory form (e.g., such that the data is stored permanently until it is intentionally deleted and/or modified).

### Invocation of an Artificially Intelligent Agent by a User Wearing a Wrist-Wearable Device

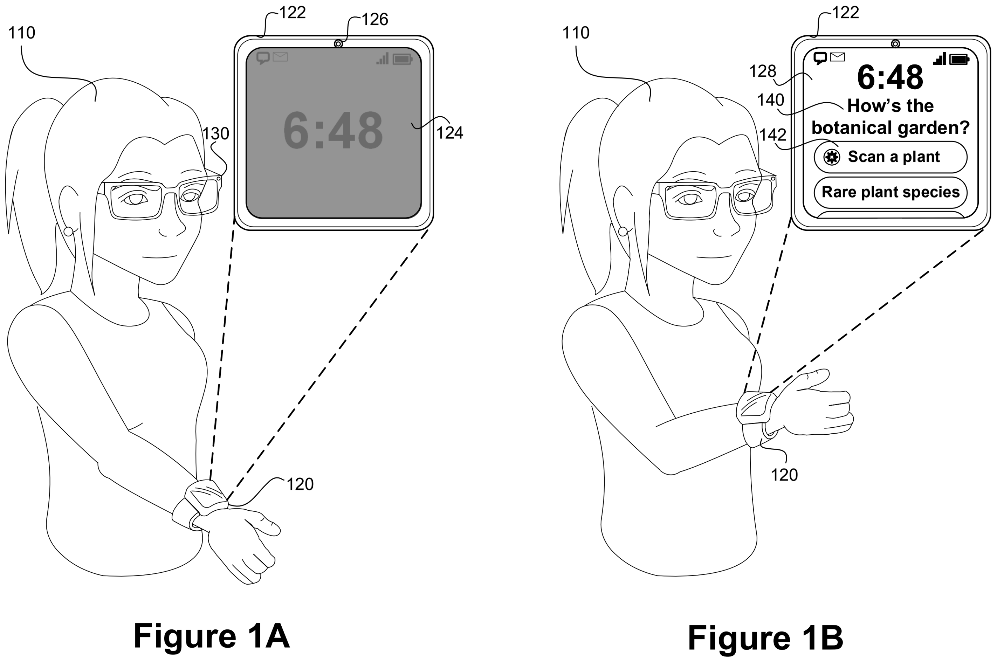

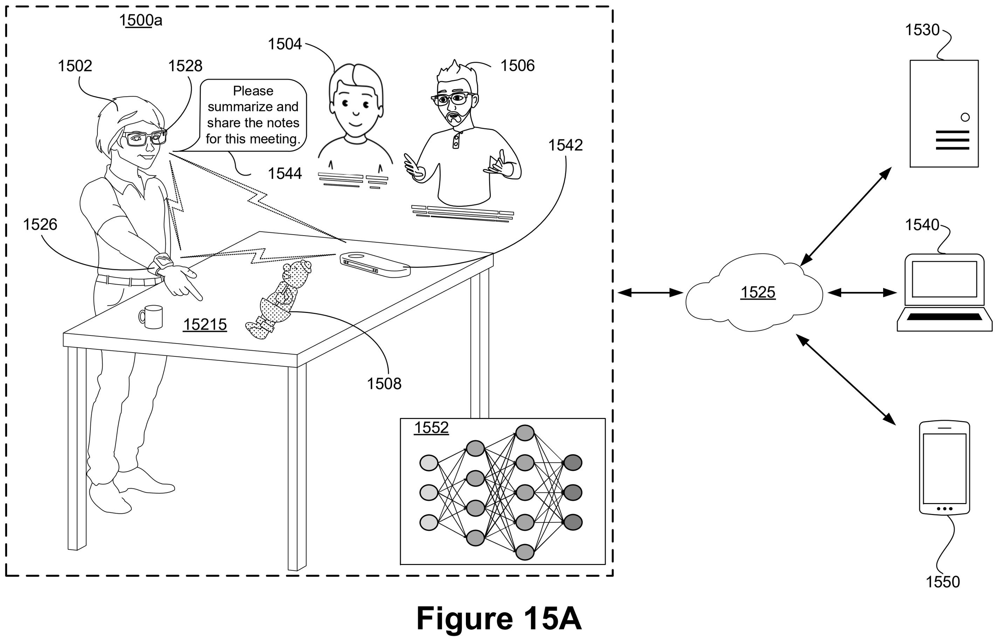

Figures 1A-1H illustrate invocation of an artificially intelligent agent at a wrist-wearable device, in accordance with some embodiments. An artificially intelligent (AI) agent is invoked by a user 110 wearing a wearable device, such as a wrist-wearable device 120. As described below in reference to Figure 15A, the wrist-wearable device 110 can include a display 122, an imaging device 126 (e.g., a camera), a microphone, a speaker, input surfaces (e.g., touch input surfaces, mechanical inputs, etc.), and one or more sensors (e.g., biopotential sensors (e.g., EMG sensors), proximity sensors, ToF sensors, sensors of an IMU, capacitive sensors, strain sensors, etc.). The user 110 can wear additional wearable devices, such as a head-wearable device 130 and/or smart textile-based garment (such as wearable bands, shirts, etc.). Additionally, the user 110 can be in possession of other electronic devices, such as an HIPD 1542, a computer 1540 (e.g., a laptop), mobile devices 1550 (e.g., smartphones, tablets), and/or other electronic devices described below in reference to Figures 15A-15C. The wearable devices and the electronic devices can be communicatively coupled via a network (e.g., cellular, near field, Wi-Fi, personal area network, wireless LAN).

In Figure 1A, the wrist-wearable device 120 worn by the user 120 is in a low power mode, suspended mode, or sleep mode that dims its display 122. For example, the display 122 presents a dimmed user interface 124 that partially or fully obfuscates a watch-face user interface (e.g., a home screen or other wrist-wearable device user interface).

Turning to Figure 1B, the wrist-wearable device 120, in response to detecting invocation of the AI agent, provides sensor data to the AI agent. In some embodiments, the wrist-wearable device detects invocation of the AI agent based on positional data indicating a user intent to wake a wrist-wearable device. For example, the user 110 can raise the wrist-wearable device 120 to wake and view the display (e.g., raising the wrist-wearable device above their waist, towards their field of view, rotation of their wrist, etc.), or the user 110 can shake their wrist to wake the wrist-wearable device 120 (and the display 122). The positional data is sensed by one or more sensors of the wrist-wearable device 120 and included in sensor data provided to the AI agent. Alternatively, or in addition, the wrist-wearable device detects invocation of the AI agent based on detected voice commands (captured by a microphone), detected hand gestures, touch inputs at the display 122, mechanical inputs at a surface or button of the wrist-wearable device 120, etc. For example, a mechanical input, touch input at the display 122, voice command, and/or hand gestures can initiate the imaging device 126 of the wrist-wearable device 120 and the captured image data invoke the AI agent, and the image data can be provided as sensor data to the AI agent.

The wrist-wearable device 120, after invoking the AI agent, presents the AI agent at a watch-face user interface 128. In particular, the watch-face user interface 128 includes a first dialogue message 140 generated by the AI agent. The first dialogue message 140 is based, in part, on the sensor data provided to the AI agent. The first dialogue message 140 can be a dialogue initiator based on location information in the sensor data (e.g., location data captured by a GPS). For example, the sensor data captured by the wrist-wearable device 120 can detect that the user 110 is at a botanical garden generate first dialogue message 140 in relation to the botanical garden (e.g., "How's the botanical garden?"). In some embodiments, the dialogue initiator is based on any sensor data provided to the AI agent, such as time of day, ongoing activities (e.g., exercising, working, communing, reading, etc.), image data, audio data, and/or other data. The dialogue initiator can be any conversation started, icebreaker, discussion springboard, topic of discussion, etc. that engages the user 110 in a conversation or dialogue with the AI agent. In some embodiments, the dialogue messages of the AI agent are configured to engage the user 110 in back-and-forth interactions that simulate conversation.

The first dialogue message 140 can include one or more suggested user queries (based on the first dialogue message or the sensor data) for performing actions. For example, the first dialogue message 140 can include a first suggested user query 142 (e.g., Scan a plant) and a second suggested user query (e.g., rare plant species) that are based on the first dialogue message 140 and/or the provided sensor data. The AI agent, when generating the first dialogue message 140, can also generate any number of suggested user queries. In some embodiments, the user 110 can scroll through the watch-face user interface to view additional suggested user queries. The suggested user queries are based on the sensor data and/or are related to a respective dialogue message.

In some embodiments, the dialogue messages generated by the AI agent are personalized based on user data, device data, user preferences, and/or user customization (e.g., selection of tone, voice, accents, etc.). For example, the user 110 can customize the AI agent to sound like their favorite music artist, actor, etc.

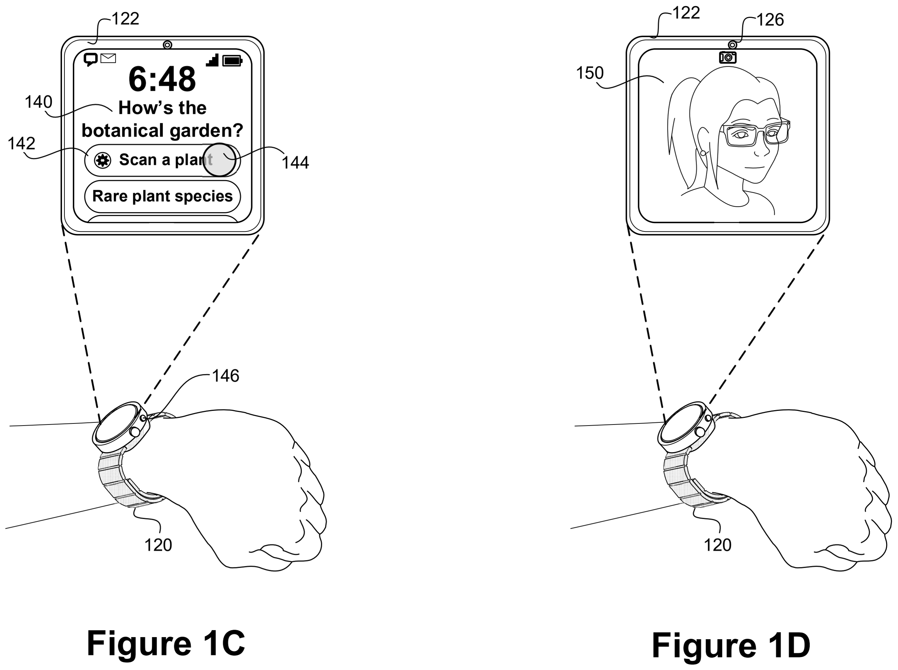

Figure 1C shows the user 110 providing a user input 144 selecting the first suggested user query 142. In some embodiments, the user input 144 is at a portion of the wrist-wearable device 120. For example, the user input 144 can be an input at a touch input surface (e.g., a touch display 122) of the wrist-wearable device 120, actuation of a mechanical button 146 (e.g., dial or another button) at the wrist-wearable device 120, a capacitive touch input at the wrist-wearable device 120, a touch gestures (e.g., a drawn gesture at the display 122) at the wrist-wearable device 120, and/or other inputs at the wrist-wearable device 122. In some embodiments, the user input 144 a hand gesture (e.g., a pinch, a finger or phalange point, a finger wave, a hand shake, a wrist rotation, etc.). In some embodiments, the user input 144 is a voice command.

While Figure 1C shows the user 110 selecting the first suggested user query 142, the user 110 can provide any user query to the AI agent. More specifically, the user queries provided by the user 110 are not dependent and/or do not need to be related to a dialogue message generated by the AI agent.

The wrist-wearable device 120, in response to a user query, provides additional sensor data to the AI agent. In some embodiments, the additional sensor data provided to the AI agent is based on the user query. For example, in Figure 1C, selection of the first suggested user query 142 (that is related to the first dialogue message 140) requests to scan a plant at the botanical garden (e.g., the user query is a request to capture image data associated with the first dialogue message 140) and, as such, the wrist-wearable device 120 initiates the imaging device 126 to capture image data that is included in the additional sensor data.

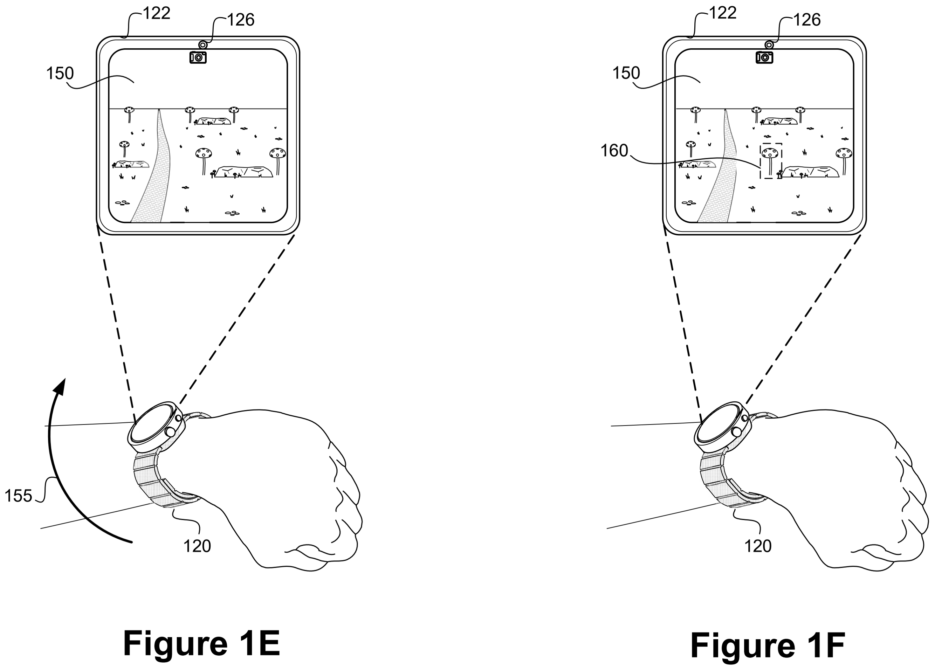

Turning to Figure 1D, the wrist-wearable device 120 initiates the imaging device 126 and scans an environment within a field of view of the imaging device 126. The wrist-wearable device 120, after initiating the imaging device, presents a capture preview user interface 150 that includes a field of view of the imaging device 126. In some embodiments, while the capture preview user interface 150 is presented by the wrist-wearable device 120, a recording user interface element (e.g., represented by a camera icon) is presented to the user 110 to inform the user 110 that the imaging device is active. The field of view of the imaging device 126 is based on a current position of the wrist-wearable device 120. For example, the user 110 can rotate the wrist-wearable device 120 towards themselves to operate the imaging device 126 in selfie-mode, which allows the user 110 to hold an object or item to be captured and/or scan their person. Alternatively, the user 110 can rotate the wrist-wearable device 120 towards their environment (represented by rotation arrow 155) to capture an object or item in their environment or to scan their environment (as shown in Figure 1E).

Figure 1F shows the wrist-wearable device 120 identifying and capturing a region of interest 160. In some embodiments, the region of interest 160 is identified or determined based, in part, on the user query. For example, the first suggested user query 142 requested to scan a plant, and the region of interest 160 is identified based on a plant in the image data representing the field of view of the imaging device 126. In some embodiments, a user 110 wearing the wrist-wearable device 119 can provide any user query (e.g., scan, log, find, etc.) and the wrist-wearable device 120, in response to detecting the user query, initiates an imaging device, identifies regions of interest within the imaging data, and captures image data including the region of interest. The captured image data including the region of interest is used as part of the (additional) sensor data.

In some embodiments, image data including the region of interest 160 is captured in response to the wrist-wearable device 120 detecting a user input to capture the image data, and the wrist-wearable device 120 (or a communicatively coupled electronic device) identifies, within the captured image data, the region of interest. For example, the user 110 can provide one or more hand gestures, voice commands, touch inputs, or other inputs to initiate the imaging device 126 of the wrist-wearable device 120 and capture image data (before a region of interest is identified), and the wrist-wearable device 120 (or other communicatively coupled electronic device) can analyze the captured image data to identify a region of interest based, in part, on a user query, dialogue message, sensor data, etc. Alternatively, in some embodiments, the wrist-wearable device 120 automatically captures, via the imaging device 126, image data including the region of interest 160 in response to detecting the region of interest 160 within the field of view of the imaging device 126.

To improve ergonomics, the AI agent (and the wrist-wearable device 120) scan the field of view of the imaging device 126 to identify regions of interest. In this way, the user 110 does not need to spend time aligning the imaging device 126 to a particular object or point of interest. Additionally, the capture preview user interface 150 allows the user 110 to visualize the field of view of the imaging device 126 aim the imaging device 126 such that a general location or object of interest is captured within the field of view of the imaging device 126. Because the AI agent (and the wrist-wearable device 120) scan the field of view of the imaging device 126 to identify regions of interest, the user 110 does not need to be accurate or adept at controlling (or aiming) the imaging device 126 of the wrist-wearable device 120 to capture image data used by the AI agent.

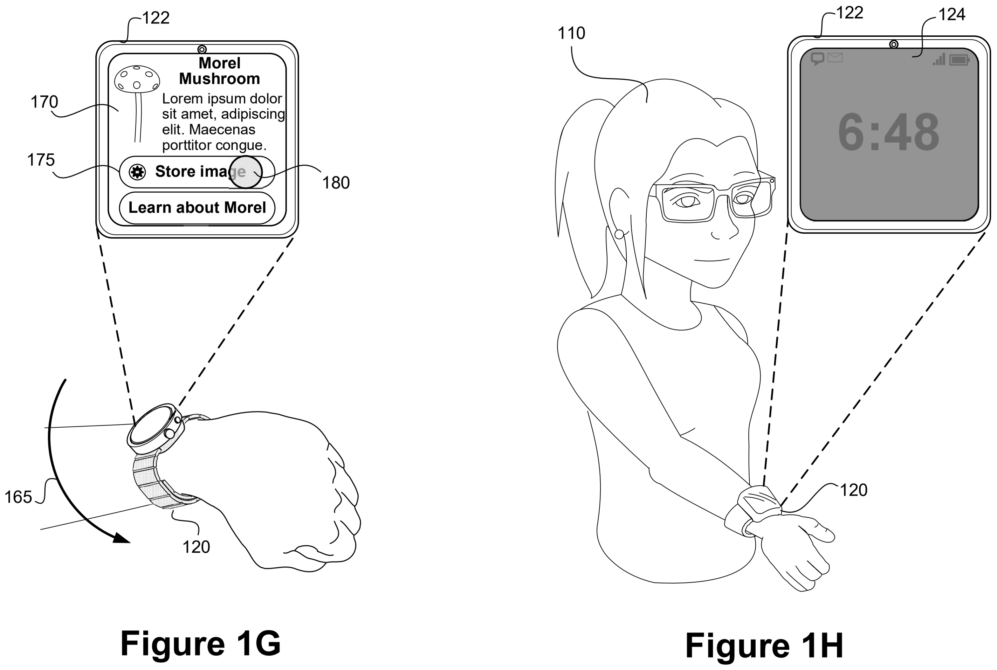

In some embodiments, image data captured in response to a user query is temporarily stored. More specifically, the image data captured in response to a user query is temporarily stored for analysis and/or completing one or more processes described herein. At completion of the analysis and/or the one or more processes, the image data captured in response to a user query is removed from the wrist-wearable device 120 after a predetermined period of time (e.g., 10 minutes, 1 hour, 1 day, etc.). In some embodiments, image data captured in response to a user query is stored at the wrist-wearable device 120 in response to a user request to store the image data at the wrist-wearable device 120 (as shown and described below in reference to Figure 1G).

Figure 1G shows the user 110 rotating their wrist to turn the display 122 back towards them (represented by rotation arrow 165). The wrist-wearable device 120 presents, at its display 122, a second dialogue message 170 generated by the AI agent. The second dialogue message 170 is i) responsive to the user query (e.g., the first suggested user query 142) and ii) based, in part, on the user query and the additional sensor data. For example, as shown in Figure 1G, the second dialogue message 170 identifies the object in the region of interest 160 (e.g., a Morel Mushroom) and provides additional information about the identified object. In some embodiments, the second dialogue message 170 can include additional suggested user queries (based on the second dialogue message or the additional sensor data) for performing actions. For example, the second dialogue message 170 can include a third suggested user query 175 (e.g., Store image) and a fourth suggested user query (e.g., Learn more about Morel) that are based on the second dialogue message 170 and/or the provided additional sensor data.

Figure 1G further shows the user 110 providing another user input 180 selecting the third suggested user query 175 (e.g., Store image). The wrist-wearable device 120, in response to selection of the third suggested user query 175, stores the image data captured in response to the first suggested user query 142 (with or without a boundary around the region of interest 160) at the wrist-wearable device 120 and/or another communicatively coupled electronic device. Alternatively, in some embodiments, the wrist-wearable device 120, in response to selection of the third suggested user query 175, stores the image data including (only) the region of interest 160 at the wrist-wearable device 120 and/or another communicatively coupled electronic device.

In Figure 1H, the user 110 lowers their wrist, which causes the wrist-wearable device 120 to enter the low power mode, suspended mode, or sleep mode (represented by the dimmed user interface 124 at the display 122).

### Invocation of an Artificially Intelligent Agent by a User Wearing a Head-Wearable Device

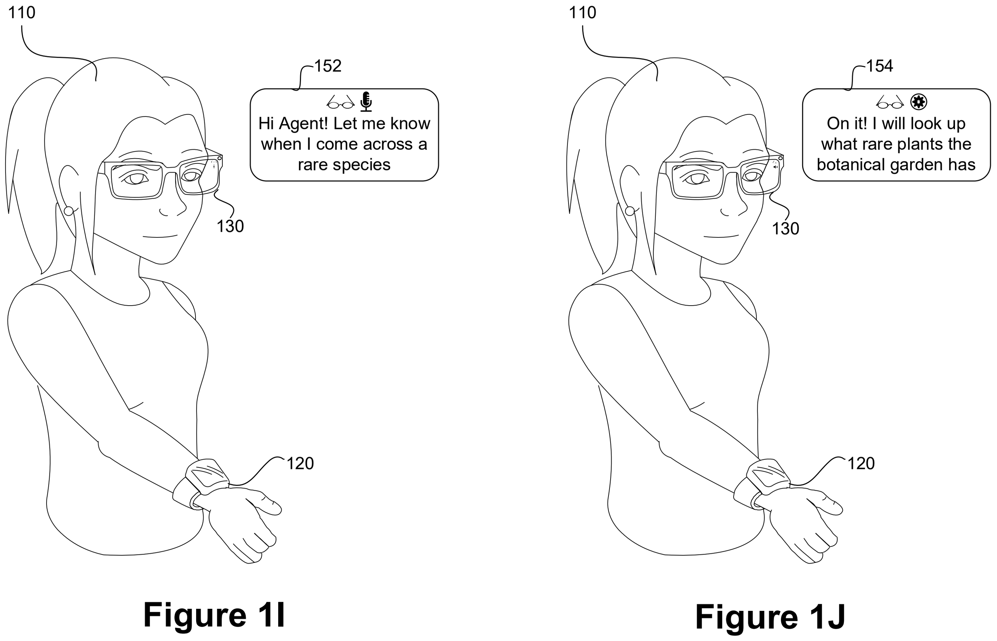

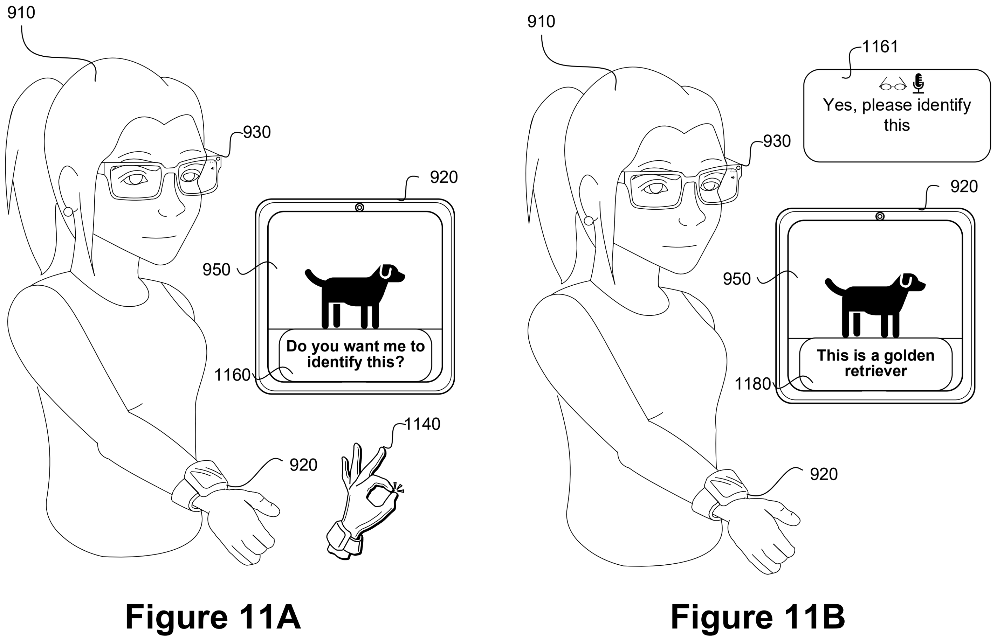

Figures 1I-IL illustrate the user 110 initiating the AI agent via a user input at the head-wearable device 130. For example, in Figure 11, the user 110 provides a voice command 152 invoking the AI agent (e.g., "Hi Agent! Let me know when I come across a rare species"). The voice command is captured by a microphone of the head-wearable device 130 (represented by the microphone and glasses icons). User inputs received at the head-wearable device 130 can include touch input gestures (e.g., a single tap, double tap, etc. at a portion of the head-wearable device 130, such as at the frame or temple arms) and hand gestures detected by an imaging device of the head-wearable device 130.

Turning to Figure 1J, the AI agent generates a dialogue message 154 that is presented to the user 110 via the head-wearable device 130. For example, in Figure 1J, the AI agent provide the dialogue message 154 (e.g., "On it! I will look up what rare plants the botanical garden has") via audio feedback provided by a speaker of the head-wearable device 130 (represented by an AI agent icon and glasses icons, as well as speaker icon on the glasses frame). Alternatively, or in addition, in some embodiments, the AI agent provides feedback via a display of the head-wearable device 130, if available, and/or haptic feedback. In response to the user's query, the AI agent initiates an imaging device of the head-wearable device 130 to detect a rare plant species.

In some embodiments, the AI agent provides feedback to the user 110 via other communicatively coupled devices, such as the wrist-wearable device 120. For example, the AI agent can cause the wrist-wearable device 120 to present audio feedback, a haptic response, and/or present the dialogue message 154 in conjunction with presenting the dialogue message 154 at the head-wearable device 130. Additionally, in some embodiments, in response to the user's query, the AI agent initiates the imaging device 126 of the wrist-wearable device 120 to detect a rare plant species. In this way, the AI agent utilizes additional data available to provide the user 110 with assistance on the requested task.

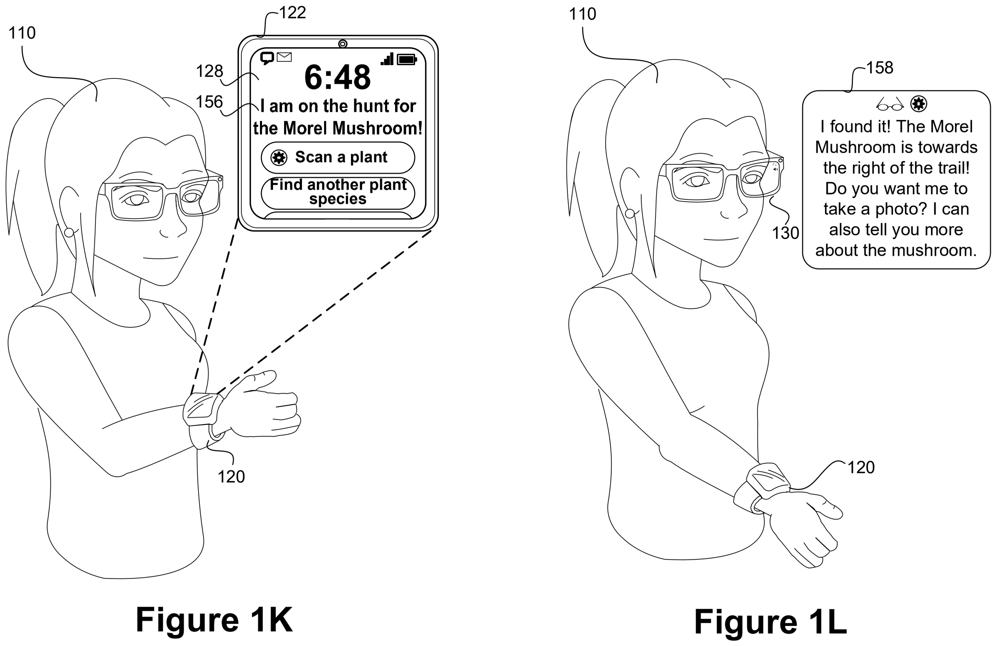

In Figure 1K, the user 110 raises the wrist-wearable device 120 to view the display 122. The AI agent presents another dialogue message 156 on the watch-face user interface of the wrist-wearable device 120. The other dialogue message 156 (e.g., "I am on the hunt for the Morel Mushroom!") continues the conversation from the dialogue message 154 and/or provides additional suggested user queries. More specifically, the AI agent is configured to operate seamlessly between different communicatively coupled devices without breaking a conversational flow between dialogue messages and/or other prompts. As described above, the AI agent generates dialogue messages based on the provided sensor data. As such, the AI agent utilizes the data obtained when searching what rare plants are at the botanical garden (in Figure 1J) to generate the other dialogue message 156 (e.g., identifying the Morel mushroom as a rare plant at the botanical garden that the user 110 is visiting).

In Figure 1L, the user 110 is exploring the botanical garden when the AI agent identifies, from image data captured by the imaging device of the head-wearable device 130, the rare plant species (e.g., the Morel Mushroom). In response to identifying the rare plant species, the AI generates yet another dialogue message 158 (and, in some embodiments, suggested user queries) and presents the yet other dialogue message 158 to the user 110 via the head-wearable device 130, wrist-wearable device 120, and/or other communicatively couple device. For example, in Figure 1L, the head-wearable device 130 presents to the user 110 the yet other dialogue message 158 and suggested user queries (e.g., "I found it! The Morel Mushroom is towards the right of the trail! Do you want me to take a photo? I can also tell you more about the mushroom.").

As described above, image data captured by the head-wearable device 130 that is used for analysis is temporarily store (and removed after a predetermined period of time). However, the user 110 can provide instructions, via a user input, to store image data captured by the head-wearable device 130. In some embodiments, the image data captured by the head-wearable device 130 is stored at the head-wearable device 130. Alternatively, or in addition, in some embodiments, the image data captured by the head-wearable device 130 is stored at another communicatively coupled devices (e.g., smartphone, wrist-wearable device 120, handheld intermediary processing device, computer, etc.).

In some embodiments, the user 110 can provide a user input for transferring captured image data between wearable devices or other communicatively coupled devices. For example, the user 110 can capture image data using the head-wearable device 130 and share the captured image data with the wrist-wearable device 120, and vice versa. In some embodiments, after the image data is shared between the wearable devices, the image data is deleted from the transferring device. For example, the head-wearable device 130, after sharing (e.g., transferring) the image data with the wrist-wearable device 120, can delete the image data from its storage. In some embodiments, the wearable devices provide haptic feedback when transfer is available and/or completed. For example, the user 110 can perform a wrist tilt at the wrist-wearable device 120 to make the wrist-wearable device 120 available for data transfer, which causes the wrist-wearable device 120 to provide a haptic response; and after receiving transferred data from another device, the wrist-wearable device 120 will provide another haptic response to indicate that the transfer is complete.

In some embodiments, the wrist-wearable device 120, the head-wearable device 130, the handheld intermediary processing device, and/or other wearable devices are communicatively coupled via a communication pairing scheme that establishes a communication channel between the devices securely and frictionlessly. In some embodiments, the communication pairing scheme allows the head-wearable device 130 and the wrist-wearable device 120 to pair and unpair with one another independently of other devices, with or without factory reset. In some embodiments, the communication pairing scheme allows for repair of the head-wearable device 130 and the wrist-wearable device 120 independent of other devices. In some embodiments, each of the wearable devices can be updated automatically through an application-initiated update or other over the air protocol. In some embodiments, the wearable devices are communicatively coupled via Bluetooth^{®}. In some embodiments, the wearable devices provide connection indicators and/or power level indicators presented at a display.

### Artificially Intelligent Agent Interactions with a Combination of Devices

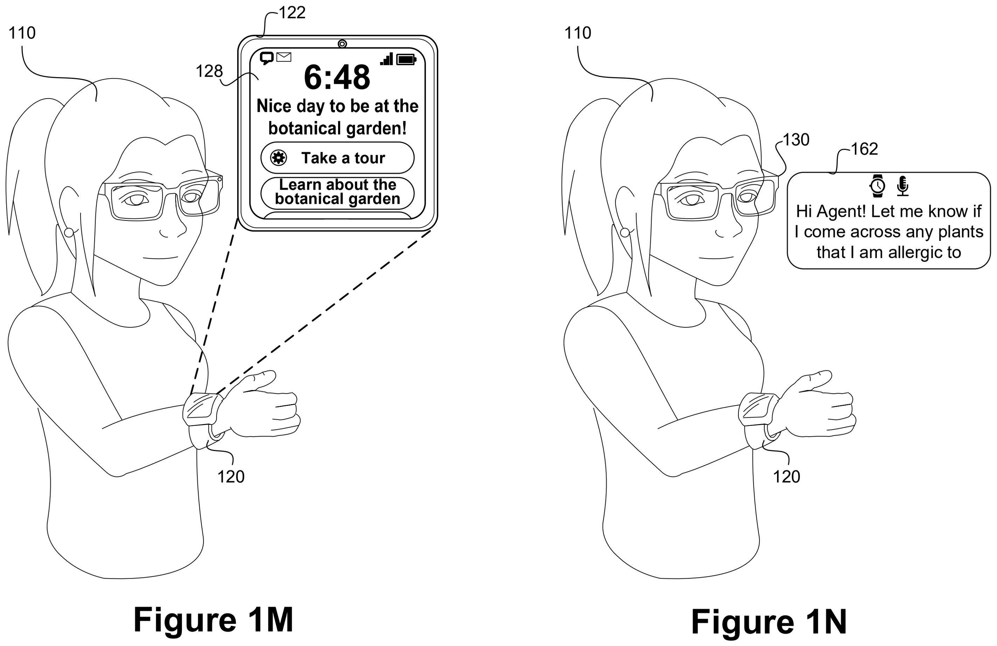

Turning to Figure 1M, the user 110 is looking at the watch-face user interface 128 presented at the display 122 of the wrist-wearable device 120 and provides a user query via a voice command 162. In particular, as shown in Figure 1N, the user 110 provides the voice command 162 invoking the AI agent (e.g., "Hi Agent! Let me know if I come across any plants that I am allergic to"). The voice command is captured by a microphone of the wrist-wearable device 120 (represented by the microphone and watch icons).

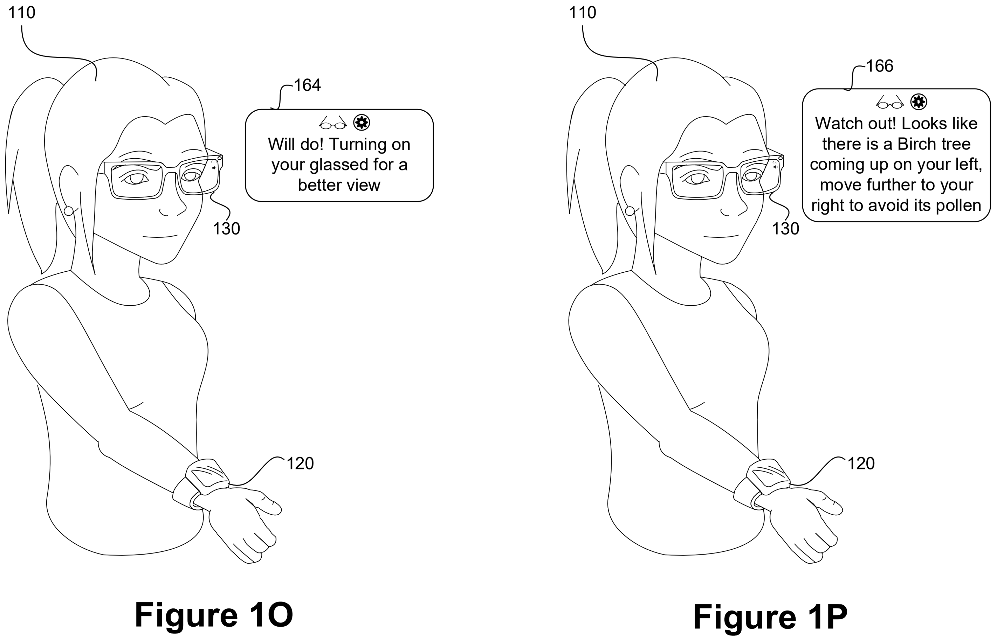

In Figure 1O, the AI agent generates a dialogue message 164 confirming the user's query 162. Additionally, in some embodiments, the AI agent identifies communicatively coupled devices and, if available, utilizes the communicatively coupled devices to obtain data for completing a task associated to the user query. For example, in Figure 1O, the dialogue message 164 generated by the AI agent indicates that the head-wearable device 130 (e.g., an imaging device of the head-wearable device 130) will be activated to capture additional image data.

In Figure 1P, the user 110 is exploring the botanical garden when the AI agent identifies, from image data captured by the imaging device of the head-wearable device 130, a plant that the user 110 is allergic to. In response to identifying the plant that the user 110 is allergic to, the AI agent generates and presents dialogue message 166 ("Watch out! Looks like there is a Birch tree coming up on your left, move further to your right to avoid its pollen"). The dialogue message 166 can be presented by the head-wearable device 130 (as shown in Figure 1P), the wrist-wearable device 120, and/or any other communicatively coupled device.

### Artificially Intelligent Agent Interactions with Introduced Devices

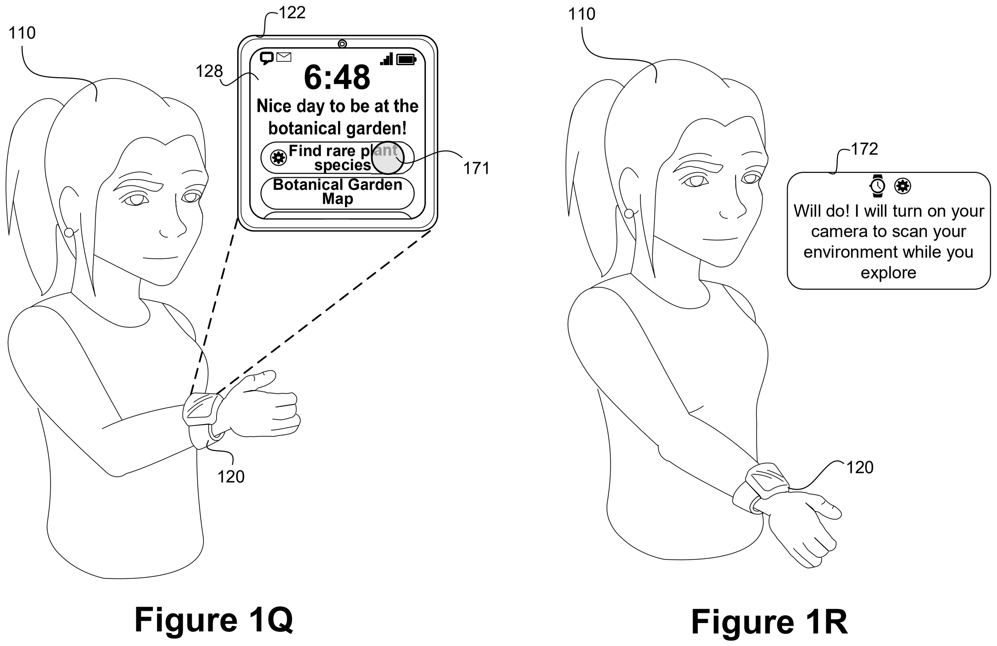

Turning to Figure 1Q, the user 110 is looking at the watch-face user interface 128 presented at the display 122 of the wrist-wearable device 120 and provides a user input 171 selecting a suggested user query ("Find rare plant species"). In Figure 1R, the AI agent generates a dialogue message 172 confirming the user's query selection. Additionally, in some embodiments, the AI agent identifies additional actions being performed to complete a task associated to the user query. For example, the dialogue message 172 generated by the AI agent indicates that an imaging device 126 of the wrist-wearable device 120 will be turned on to scan an environment.

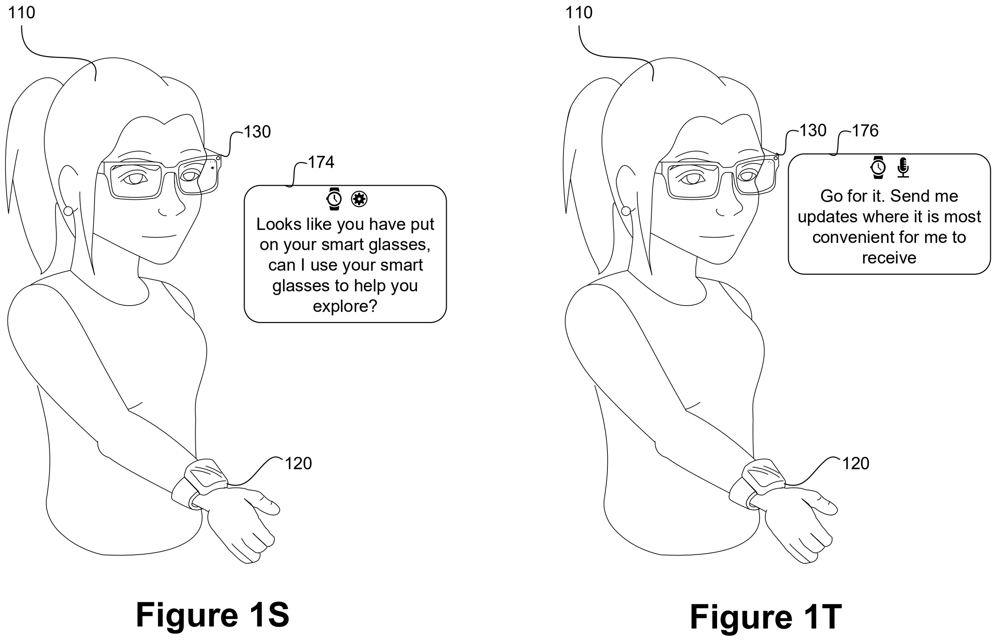

In Figure 1S, the user 110 dons the head-wearable device 130. The AI agent, in response to detecting that the user 110 donned the head-wearable device 130, generates another dialogue message 174 that is presented to the user 110. In particular, the AI agent requests the user 110 for permission to use devices that become available to the user 110 via a donning, doffing, and/or recently connected devices. For example, the dialogue message 174 generated by the AI agent is presented by the wrist-wearable device 120 (e.g., as audio feedback provided via a speaker) and request the user 110 for permission to use the recently donned head-wearable device 130 ("Looks like you have put on your smart glasses, can I use your smart glasses to help you explore?"). The AI agent can detect recently connected devices and/or recently donned or doffed devices and request permission or cease use of the devices accordingly. For example, if the user removes the wrist-wearable device 120, the AI agent would continue to utilize the head-wearable device 130, and if the user were to don the wrist-wearable device 120 again, the AI agent would generate a dialogue message requesting permission to use sensor data from the wrist-wearable device 120.

Turning to Figure 1T, the user 110 provides a voice command 176, via the wrist-wearable device 120, granting the AI agent permission to use the recently donned head-wearable device 130. Additionally, the user 110 also request the AI agent how they would like to receive notifications (e.g., "Go for it. Send me updates where it is most convenient for me to receive"). The AI agent, in response to the user's request, selectively provides notifications, updates, dialogue messages, and/or other prompts to the user 110 via one or more devices. For example, if the user raises the wrist-wearable device 120 to view the display 122, the AI agent would present a dialogue message via the wrist-wearable device 120. In another example, if the user were at a library, the AI agent would present a dialogue message via a display of the wrist-wearable device 120, a display of the head-wearable device 130, and/or other communicatively coupled display to avoid making distracting sounds. In yet another example, if the user has the wrist-wearable device 120 lowered, the AI agent would present a dialogue message via the head-wearable device 130 (allowing the user with frictionless access to the AI agent). The AI agent can seamlessly provide notifications, updates, dialogue messages, and/or other prompts via one or more devices based on the situation, social constraints, and/or where most practical for the user 110.

### Example Dialogue Messages and User Queries

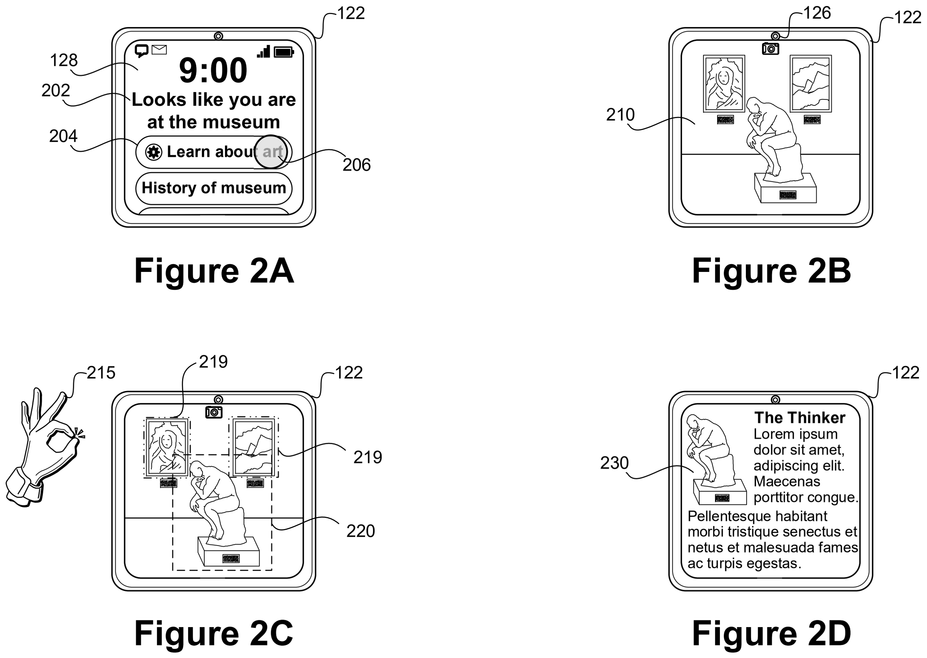

Figures 2A-2D illustrate user inputs for interacting with an AI agent presented at a wrist-wearable device, in accordance with some embodiments. Figure 2A shows a watch-face user interface 128 presented at a display 122 of a wrist-wearable device 120 (Figures 1A-1H). The watch-face user interface 128 includes a dialogue message 202 ("Looks like you are at the museum") and suggested user queries (e.g., "learn about art" and "history of museum"). In Figure 2A, a user provides a user input 206 selecting a suggested user query for learning about art. In response to the user input 206, the wrist-wearable device 120, as shown in Figure 2B, presents a capture preview user interface 210 at the display 122. The capture preview user interface 210 includes a representation of a field of view of the imaging device 126.

Turning to Figure 2C, the wrist-wearable device 120 identifies one or more regions of interest (e.g., first region of interest 217, second region of interest 219, and third region of interest 220) based on the dialogue message and/or user query. For example, because the selected user query requested to learn about art, the wrist-wearable device 120 identified relevant pieces of art in the representation of the field of view of the imaging device 126, and presented each identified relevant piece of art with a respective bounding box (e.g., dashed lines representing the regions of interests).

In some embodiments, a user can provide one or more user inputs to select and capture image data including the one or more regions of interest within the representation of the field of view of the imaging device 126. For example, a user can provide one or more inputs (e.g., hand gestures (wrist rolls, finger waves, hand swipes, etc.), voice commands, touch inputs, etc.) to select different regions of interests, cycle through the regions of interests, select different combinations of the regions of interests, etc. Selected regions of interest are presented with a first bounding box and unselected regions of interest are presented with a second bounding box distinct from the first. For example, as shown in Figure 2C, the third region of interest 220 is presented with a first line pattern and the first and second regions of interest 220 are presented with a second line patter. After selecting one or more regions of interest, a user can provide another user input to capture image data including the selected regions of interest. For example, as shown in Figure 2C, the user selected only the third region of interest 220 and provide a user input (e.g., pinch gesture 215) to capture image data including the third region of interest 220.

In response to the capture of image data including the third region of interest 220, the AI agent generates another dialogue message 230 based on sensor data and the image data including the third region of interest 220. The other dialogue message 230 is presented at the display 122 of the wrist-wearable device 120. While Figures 2A-2D illustrate selection of a single region of interest, a user can select any number of regions of interest and the AI agent will generate dialogue messages (and, in some embodiments, suggested queries) for each of the regions of interest, or generate an overall dialogue message (and, in some embodiments, suggested queries) that expands on each of the selected regions of interest. Additional information on generation of the dialogue messages and suggested user queries is provided above in reference to Figures 1A-1H.

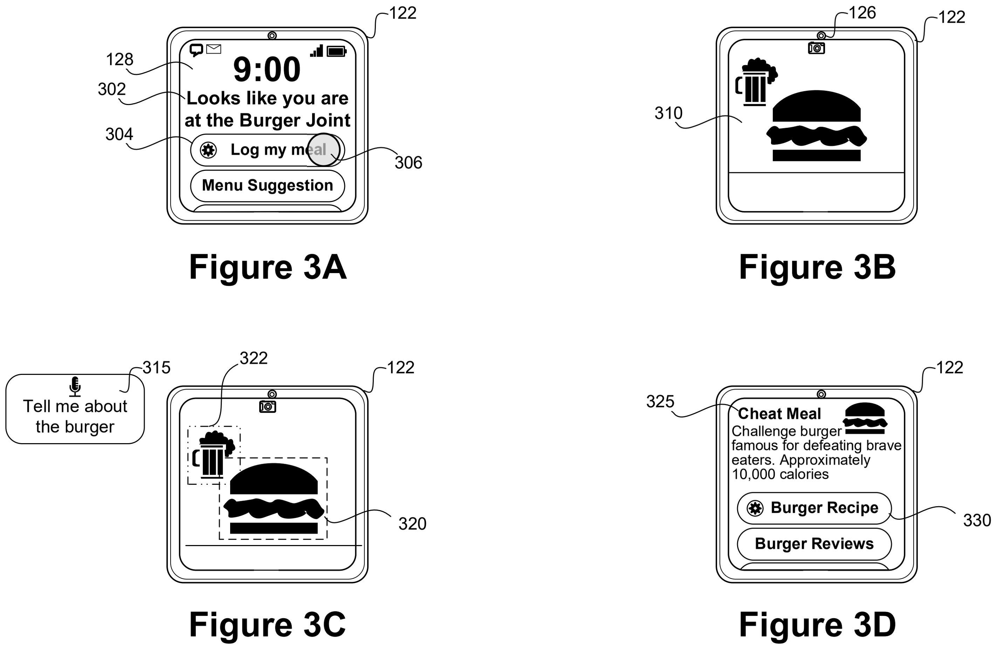

Figures 3A-3D illustrate user inputs for interacting with an AI agent presented at a wrist-wearable device, in accordance with some embodiments. Figure 3A shows a watch-face user interface 128 presented at a display 122 of a wrist-wearable device 120 (Figures 1A-1H). The watch-face user interface 128 includes another dialogue message 302 ("Looks like you are at the Burger Joint") and other suggested user queries (e.g., "log my meal" and "menu suggestions"). In Figure 3A, a user provides a user input 306 selecting a suggested user query for logging their meal. In response to the user input 306, the wrist-wearable device 120, as shown in Figure 3B, presents a capture preview user interface 310 at the display 122. The capture preview user interface 310 includes a representation of a field of view of the imaging device 126.

Figure 3C shows identification of regions of interest associated with the selected user query (e.g., drink region of interest 322 and burger region of interest 320). In some embodiments, the wrist-wearable device 120 automatically captures image data including the regions of interests to complete the user query (e.g., capturing image data of the user's drink and burger).

In some embodiments, as further shown in Figure 3C, the user can provide an additional user query while actions associated with the first user query are being completed. For example, while the drink region of interest 322 and the burger region of interest 320 are being identified within the representation of the field of view of the imaging device 126, the user provides a voice command user query 315 (e.g., tell me about the burger). In some embodiments, the wrist-wearable device 120 completes the first user query before completing the subsequent user query. For example, in accordance with the selected suggested user query for logging their meal, the wrist-wearable device will capture image data including the user's drink and burger before generating a dialogue message for the voice command user query 315. Alternatively, in some embodiments, the wrist-wearable device 120 will cease performing the first user query and prioritize the subsequent user query.

Figure 3D shows a new dialogue message 325 and new suggested user queries generated by the AI agent in response to the voice command user query 315. Additional information on generation of the dialogue messages and suggested user queries is provided above in reference to Figures 1A-1H.

In some embodiments, the AI agent generates visual response for the dialogue messages, suggested user queries, and/or other prompts. For example, the AI agent can generate and cause the presentation of visual translations, text translations, searches, weather, stocks, sports, recipes, local information (landmarks, local events, local maps, etc.), people, etc. and/or other information that is included in the dialogue messages, suggested user queries, and/or other prompts.

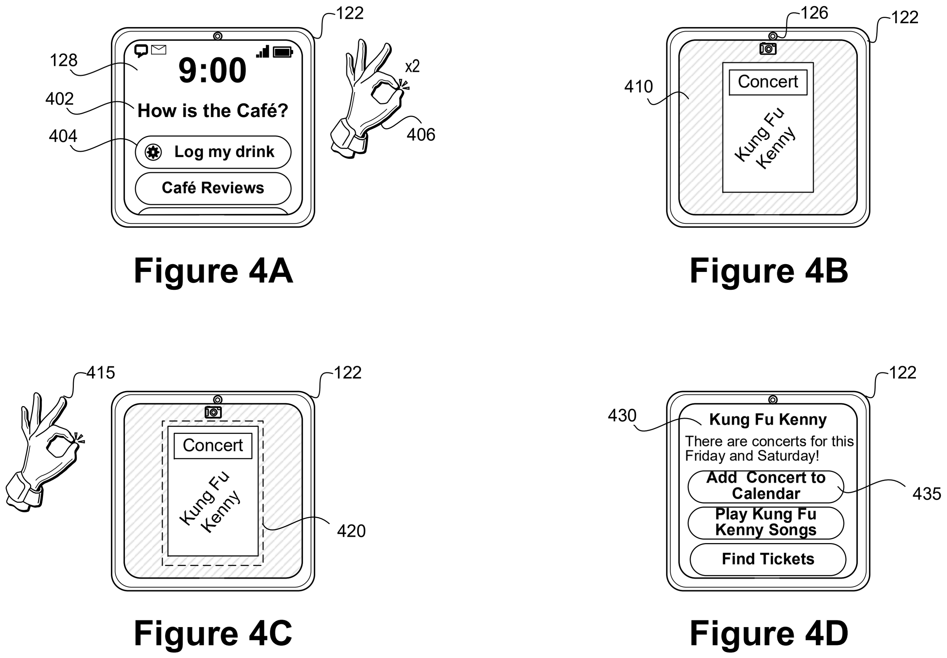

Figures 4A-4D illustrate user inputs invoking an AI agent at a wrist-wearable device, in accordance with some embodiments. Figure 4A shows a watch-face user interface 128 presented at a display 122 of a wrist-wearable device 120 (Figures 1A-1H). The watch-face user interface 128 includes dialogue message 402 ("How is the Café?") and related suggested user queries (e.g., "log my drink" and "Café reviews"). In Figure 3A, a user provides a user input 406 (e.g., double pinch hand gesture) to provide another user query. The other user query does not need to be related to the presented dialogue message 402. For example, as shown in Figures 4A and 4B, the user input 406 initiates an imaging device 126 of the wrist-wearable device 120 such that the user can provide a user query based on captured image data. As described above, a capture preview user interface 410 is presented at the display 122 of the wrist-wearable device and includes a representation of a field of view of the imaging device 126.

In Figure 4C, a region of interest 420 within the representation of the field of view of the imaging device 126 is identified, and the user provides another user input 415 (e.g., a pinch gesture) to capture image data including the region of interest 420. In Figure 4D, the AI agent generates a dialogue message 430 related to the captured image data (e.g., "There are concerts for this Friday and Saturday!") and suggested user queries 435 including following-up actions based on the dialogue message (e.g., "Add concert to calendar," "Play Kung Fu Kenny Songs," or "Find tickets" in response to a Kung Fu Kenny concert poster). Additional information on generation of the dialogue messages and suggested user queries is provided above in reference to Figures 1A-1H.

In some embodiments, the user 110 can select a device for presenting audio data or feedback. For example, in response to the user 110 selecting the suggested user query "Play Kung Fu Kenny Songs," the AI agent can automatically cause audio to be presented at the wrist-wearable device 120 and/or select another device for presenting the audio data (e.g., the head-wearable device 130). In some embodiments, the user 110 can select a device for presenting the audio data and/or transfer the presentation of audio data between devices (e.g., from the wrist-wearable device 120 to the head-wearable device 130, and vice versa). In some embodiments, the user 110 can provide user inputs at one wearable device to adjust the presentation of information of data at another device. For example, the user 110 can adjust a volume of audio data presented at the head-wearable device 130 via a user input at the wrist-wearable device 120.

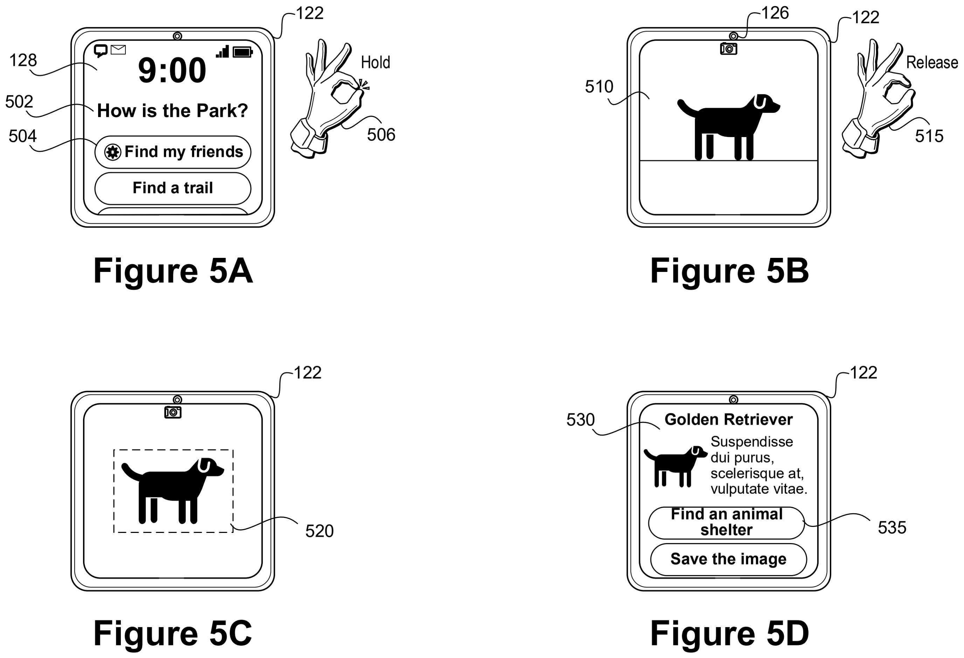

Figures 5A-5D illustrate additional user inputs invoking an AI agent at a wrist-wearable device, in accordance with some embodiments. Figure 5A shows a watch-face user interface 128 presented at a display 122 of a wrist-wearable device 120 (Figures 1A-1H). The watch-face user interface 128 includes dialogue message 502 ("How is the Park?") and related suggested user queries (e.g., "Fing my friends" and "Find a trail").

In Figures 5A and 5B, a user performs a user input to scan their environment. For example, the user performs a pinch and hold gesture 506 causing an imaging device 126 of the wrist-wearable device 120 to capture image data and cease capturing image data when the user releases the held pinch gesture 515. To assist the user in scanning the environment the wrist-wearable device can present, at the display 122, a capture preview user interface 510 including a representation of a field of view of the imaging device 126.

In Figure 5C, the wrist-wearable device 120 (and/or another communicatively coupled electronic device) analyzes the captured image data to identify a region of interest 520. As further shown in Figure 5D, the AI agent generates a new dialogue message 530 and new suggested user queries 535 based on the region of interest 520.

### Example Recall by an AI Agent

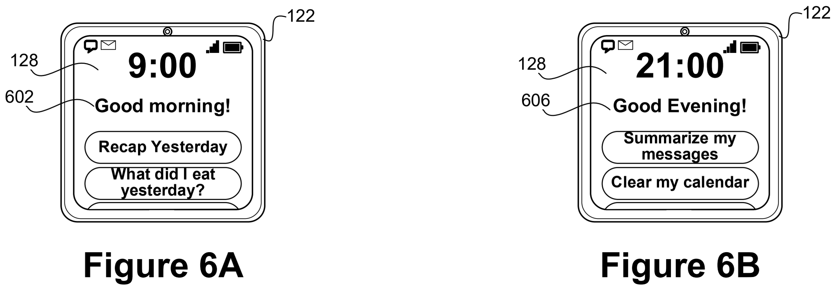

Figures 6A and 6B illustrate example recall dialogue messages generated by an AI agent, in accordance with some embodiments. In Figure 6A, a watch-face user interface 128 at a first point in time is presented at a display 122 of the wrist-wearable device 120 (Figures 1A-1H). The watch-face user interface 128 includes an AI agent generated dialogue message 602 for the user based, at least, on the time of day. The dialogue message 602 also includes suggested user queries to assist the user in tracking activity on previous days. For example, the dialogue message 602 includes a first suggested user query ("Recap Yesterday") and a second suggested user query ("What did I eat yesterday?").

In Figure 6B, a watch-face user interface 128 at a second point in time is presented at the display 122 of the wrist-wearable device 120. The watch-face user interface 128 includes another AI agent generated dialogue message 606 for the user based, at least, on the time of day. The dialogue message 606 also includes suggested user queries to assist the user in everyday activities and/or tracking. For example, the dialogue message 606 includes a first suggested user query ("Summarize my messages") and a second suggested user query ("Clear my calendar").

In some embodiments, the wearable devices are configured to receive cross-device notifications (e.g., messages, application updates, group messages, linked account updates, emails, account updates, etc.). In some embodiments, the dialogue messages and/or the suggested user queries can recall or summarize a user's day and/or previous day(s). In some embodiments, the dialogue messages and/or the suggested user queries can recall or summarize a user's messages and/or notifications. In some embodiments, the dialogue messages and/or the suggested user queries can recall or summarize application specific updates, device updates, etc.

In some embodiments, the wearable devices can be used for native and/or non-native audio calls. For example, a user can use the wrist-wearable device 120 and/or the head-wearable device 130 to answer incoming calls; make outgoing calls; access keypad for touch-tone interactions; manage call volume on the head-wearable device 130 and/or wrist-wearable device 120; switch audio outputs and/or mic inputs for ongoing calls to the head-wearable device 130, the wrist-wearable device 120, or other wearable devices when the user dons or doffs a wearable device. In some embodiments, the above audio controls are performed via invocation of the AI agent, and/or the AI agent automatically controls the devices based on the user's preferences.

In some embodiments, the wearable devices can be used for non-native audio calls. For example, a user can use the wrist-wearable device 120 and/or the head-wearable device 130 to answer incoming calls; make outgoing calls; access keypad for touch-tone interactions; manage call volume on the head-wearable device 130 and/or wrist-wearable device 120; switch audio outputs and/or mic inputs for ongoing calls to the head-wearable device 130, the wrist-wearable device 120, or other wearable devices when the user dons or doffs a wearable device. In some embodiments, the above audio controls are performed via invocation of the AI agent, and/or the AI agent automatically controls the devices based on the user's preferences.

### Example Watch-Face User Interfaces Including an AI Agent

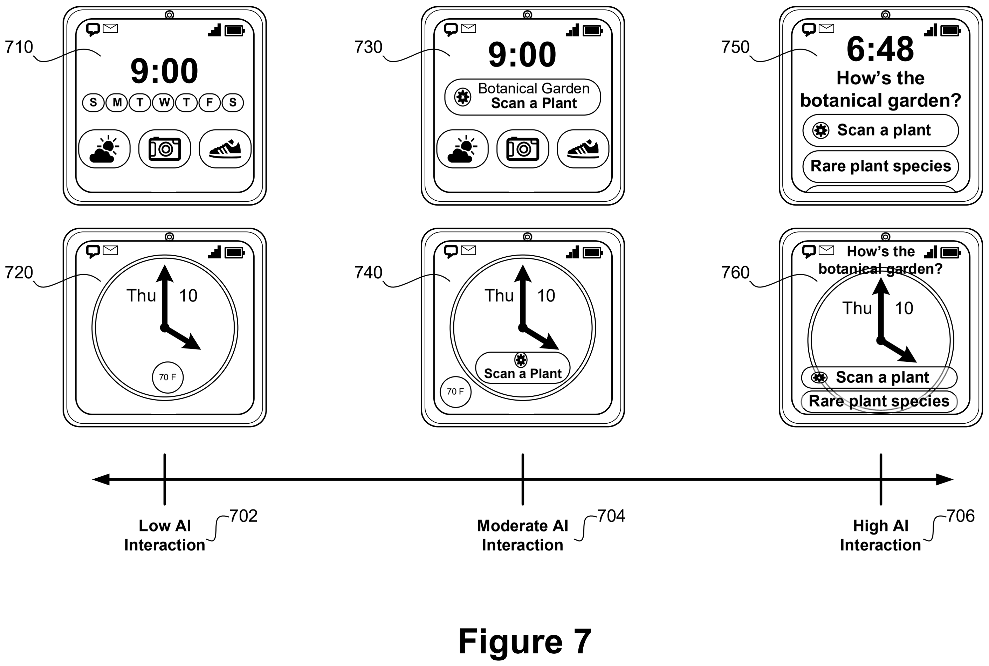

Figure 7 illustrates example watch-face user interfaces including an AI agent, in accordance with some embodiments. In some embodiments, the AI agent is part of a watch-face user interface. For example, as shown in Figure 7, the AI agent can be part of different watch-face user interfaces of a wrist-wearable device 120 (Figures 1A-1H). The AI agent included on a watch-face user interface is based on a selected AI interaction level. For example, at low AI interaction levels, watch-face user interfaces can have minimal to no AI agent visibility (and/or activity) as shown by a first watch-face user interface 710 and a second watch-face user interface 710. At moderate AI interaction levels, watch-face user interfaces can have subtle AI agent visibility (and/or activity) as shown by a third watch-face user interface 730 and a fourth watch-face user interface 740. At high AI interaction levels, watch-face user interfaces can have overt AI agent visibility (and/or activity) as shown by a fifth watch-face user interface 750 and a sixth watch-face user interface 760.

In some embodiments, the AI interaction level is selected by a user. Alternatively, or in addition, in some embodiments, the AI interaction level is automatically selected by the wrist-wearable device 120 based on one or more parameters. For example, in some embodiments, the wrist-wearable device 120 can automatically select an AI interaction level based on one or more of a wrist-wearable device battery level, a wrist-wearable device network connectivity status, communicatively coupled electronic devices, charging status, etc.

### Example Diagrams for Invoking an AI Agent

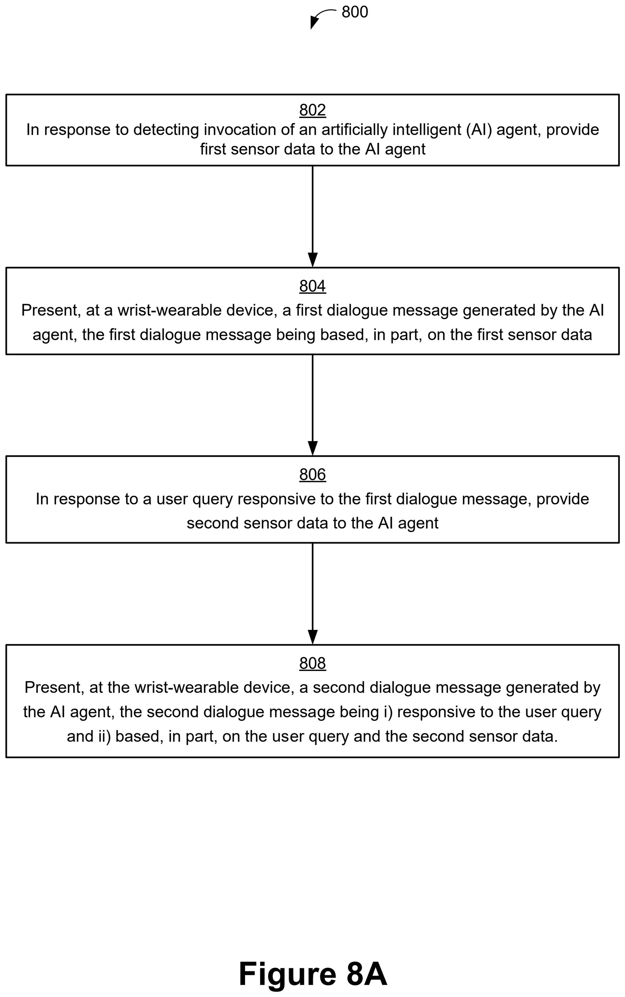

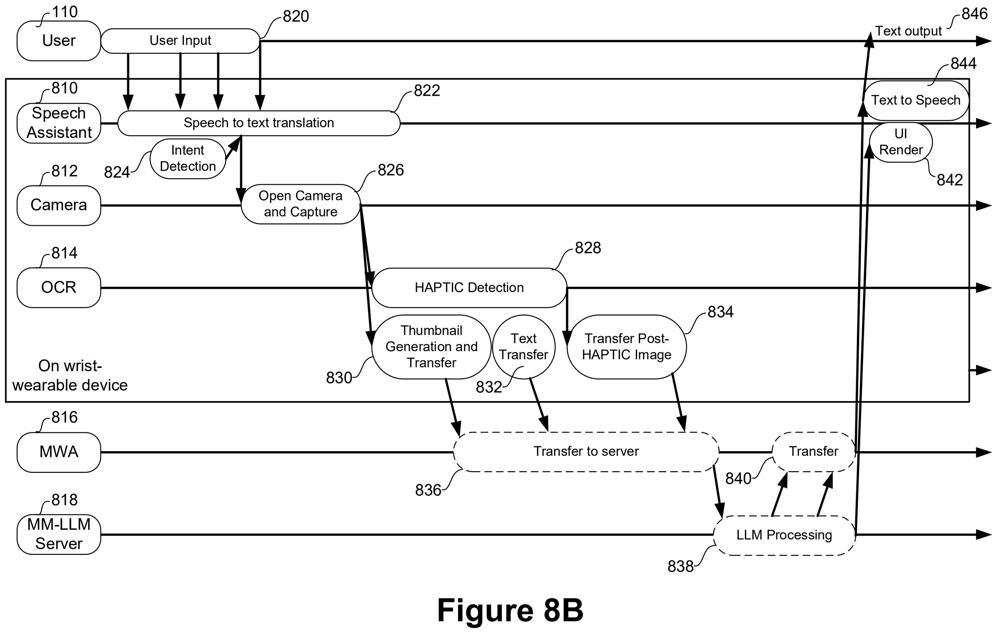

Figure 8A illustrates a flow diagram of a method of invoking an AI agent at a wrist-wearable device, in accordance with some embodiments. Operations (e.g., steps) of the method 800 can be performed by one or more processors (e.g., central processing unit and/or MCU) of a system (e.g., a wrist-wearable device 120). At least some of the operations shown in Figure 8 correspond to instructions stored in a computer memory or computer-readable storage medium (e.g., storage, RAM, and/or memory, such as memory of a wrist-wearable device 1526; Figure 15A). Operations of the method 800 can be performed by a single device alone or in conjunction with one or more processors and/or hardware components of another communicatively coupled device (e.g., a handheld intermediary processing device 1542, head-wearable device 1528, and/or other devices described below in reference to Figures 15A-15C) and/or instructions stored in memory or computer-readable medium of the other device communicatively coupled to the system. In some embodiments, the various operations of the methods described herein are interchangeable and/or optional, and respective operations of the methods are performed by any of the aforementioned devices, systems, or combination of devices and/or systems. For convenience, the method operations will be described below as being performed by particular component or device, but should not be construed as limiting the performance of the operation to the particular device in all embodiments.

(A1) Figure 8 shows a flow chart of a method 800 of invoking an AI agent at a wrist-wearable device, in accordance with some embodiments. The method 800 occurs at a wrist-wearable device with one or more of a display, an imaging device, touch input surfaces, mechanical input elements, a microphone, speakers, biopotential sensors (e.g., EMG sensors), and/or other components described in reference to Figure 15A. In some embodiments, the method 800 includes, in response to detecting invocation of an artificially intelligent (AI) agent, providing (802) first sensor data to the AI agent and presenting (804), at the wrist-wearable device, a first dialogue message generated by the AI agent. The first dialogue message is based, in part, on the first sensor data. The method 800 includes, in response to a user query responsive to the first dialogue message, providing second sensor data to the AI agent and presenting, at the wrist-wearable device, a second dialogue message generated by the AI agent. The second dialogue message is i) responsive to the user query and ii) based, in part, on the user query and the second sensor data.

(A2) In some embodiments of A1, the invocation is a first hand gesture, and the method 800 further includes initiating an imaging device of the wrist-wearable device, scanning an environment within a field of view of the imaging device, capturing, via the imaging device, image data including the field of view of the imaging device, and including the image data in the first sensor data. For example, as shown in at least Figures 4A-4D, a user wearing a wrist-wearable device can perform a hand gesture (e.g., double pinch or double phalange tap) to initiate an imaging device and provide the AI agent with image data for generating a dialogue message (e.g., "There are concerts for this Friday and Saturday!").

(A3) In some embodiments of A2, the image data including the field of view of the imaging device is captured in response to detection of a second hand gesture. For example, as shown in at least Figure 4C, a user wearing a wrist-wearable device performs another hand gesture (e.g., single pinch or single phalange tap) to capture image data.

(A4) In some embodiments of any one of A2-A3, the first hand gesture is held and the image data including the field of view of the imaging device is captured in response to detection of that the first hand gesture is no longer held. For example, as shown in at least Figures 5A-5D, a user wearing a wrist-wearable device can perform a held hand gesture (e.g., a maintained or held pinch) to initiate an imaging device and release the hand gesture to capture image data (e.g., releasing the pinch).

(A5) In some embodiments of any one of A1-A4, the invocation is detection of positional data indicating a user intent to wake a wrist-wearable device. For example, as shown in Figures 1A-1H, a user wearing a wrist-wearable device can raise the wrist-wearable device or look at the wrist-wearable device to invoke the AI agent. The positional data can be included in the sensor data.

(A6) In some embodiments of any one of A1-A5, the invocation is a voice command. For example, as shown in Figures 3A-3D, a user wearing a wrist-wearable device can provide voice commands, via a microphone, which are provided to the AI agent (e.g., captured audio data can be included in the sensor data).

(A7) In some embodiments of any one of A1-A6, the user query is a request to capture image data associated with the first dialogue message, and the method includes initiating an imaging device of the wrist-wearable device, scanning an environment within a field of view of the imaging device, capturing, via the imaging device, image data including a region of interest within the field of view of the imaging device, and including the image data in the second sensor data. The region of interest can be determined, in part, on the user query. For example, as shown in Figures 1A-5D, a user wearing a wrist-wearable device can provide a user query (e.g., scan, log, find, etc.); the wrist-wearable device, in response to detecting the user query, initiates an imaging device, identifies regions of interest within the imaging data, and captures image data including the region of interest, which is used as part of sensor data.

(A8) In some embodiments of A7, capturing the image data including the region of interest within the field of view of the imaging device includes detecting a user input to capture the image data; and identifying, within the image data, the region of interest. For example, as shown in Figures 1A-5D, a user wearing a wrist-wearable device can provide one or more gestures or inputs for initiating and capturing image data, which can be analyzed to identify a region of interest based, in part, on the user query.

(A9) In some embodiments of any one of A7-A8, capturing the image data including the region of interest within the field of view of the imaging device includes detecting the region of interest within the field of view of the imaging device and, in response to detecting the region of interest within the field of view of the imaging device, automatically capturing, via the imaging device, the image data. For example, as shown in Figures 1A-1H, a wrist-wearable device can automatically capture image data including a region of interest.

(A10) In some embodiments of any one of A7-A9, the user query is provided via a hand gesture.

(A11) In some embodiments of any one of A7-A10, the user query is provided via a user input at a portion of the wrist-wearable device. For example, the user input can be an input at a touch input surface (e.g., a touch display) of the wrist-wearable device, actuation of a mechanical button at the wrist-wearable device, a capacitive touch input at the wrist-wearable device, a touch gestures at the wrist-wearable device, and/or other inputs at the wrist-wearable device.

(A12) In some embodiments of any one of A7-A11, the user query is provided via a voice command.

(A13) In some embodiments of any one of A1-A12, the user query is a request for additional information related the first dialogue message. For example, as shown in at least Figure 2A, a first dialogue message can be "Looks like you are at the museum" and the user query is a request for additional information related the first dialogue message can be "learn about art" or "history of museum."

(A14) In some embodiments of any one of A1-A13, the first dialogue message includes a suggested user query, based on the first dialogue message, for performing actions. For example, as shown in Figures 1A-5D, the AI agent can provide one or more suggested user queries based on the dialogue message (e.g., "learn about art" or "history of museum" in response to "Looks like you are at the museum").

(A15) In some embodiments of any one of A1-A14, the second dialogue message includes another suggested user query, based on the second dialogue message, for performing following-up actions. For example, as shown in Figures 1A-5D, the AI agent can continue to provide new and subsequent dialogue messages and user queries responsive to provided data (e.g., "Add concert to calendar," "Play Kung Fu Kenny Songs," or "Find tickets" in response to a Kung Fu Kenny concert poster).

(A16) In some embodiments of any one of A1-A15, AI agent is part of a watch-face user interface. For example, as shown in Figure 7, the AI agent can be part of one or more watch-face user interfaces (e.g., home screens) of a wrist-wearable device.

(A17) In some embodiments of A16, the method 800 includes in response to selection of an AI interaction level, adjusting the watch-face user interface based on a selected AI interaction level. For example, as shown in Figure 7, different AI interaction levels can be selected, and the AI agent's interaction level is reflected on a watch-face user interface.

(A18) In some embodiments of A17, the selection of the AI interaction level is based on one or more of user selection, a wrist-wearable device battery level, a wrist-wearable device network connectivity status, or devices communicatively coupled with the wrist-wearable device.

(A19) In some embodiments of any one of A1-A18, the first dialogue message includes a dialogue initiator based on a location in the first sensor data. For example, as shown in Figures 1A-1H, the wrist-wearable device can detect that a user wearing the wrist-wearable device is at a botanical garden and propose user queries related to the botanical garden. In some embodiments, the dialogue initiator is based on any sensor data provided to the AI agent, such as time of day, ongoing activities (e.g., exercising, working, communing, reading, etc.), image data, audio data, and/or other data. The dialogue initiator can be any conversation started, icebreaker, discussion springboard, topic of discussion, etc. that engages a user wearing the wrist-wearable device in a conversation or dialogue. In some embodiments, the dialogue messages of the AI agent are configured to engage the user in back-and-forth interactions that simulate conversation.

In some embodiments, the user can provide an input or perform a hand gestures to invoke the AI agent and initiate a conversation. For example, in some embodiments, the user can perform a double pinch or a double thumb tap gesture detected by the wrist-wearable device 120 (or other device) and invoke the AI agent for initiating a conversation. In some embodiments, the AI agent can be initiated at the wrist-wearable device, the head-wearable device, and/or other communicatively coupled device. In some embodiments, the device invoking the AI agent is based on the user input or hand gesture performed (e.g., double pinch gesture initiates the AI agent at the wrist-wearable device and a triple pinch gesture initiates the AI agent at the head-wearable device).

(A20) In some embodiments of any one of A1-A19, the second dialogue message is generated with a user-perceived latency no greater than 10 seconds, no greater than 8 seconds, or no greater than 5 seconds. The user-perceived latency is the time between the user query and a received dialogue message or response.

(A21) In some embodiments of any one of A1-A20, the first dialogue message and the second dialogue message are personalized based on user data, device data, user preferences, and/or user customization (e.g., selection of tone, voice, accents, etc.).

(A22) In some embodiments of any one of A1-A21, wherein the first dialogue message includes a user query for summarizing a portion of a day of a user wearing the wrist-wearable device. For example, as shown in Figure 6, the AI agent can summarize a user's previous days, messages, activities, meals, etc.

(B1) In accordance with some embodiments, a system that includes one or more wrist-wearable devices and a pair of augmented-reality glasses, and the system is configured to perform operations corresponding to any of A1-A22.

(C1) In accordance with some embodiments, a non-transitory computer readable storage medium including instructions that, when executed by a computing device in communication with a wrist-wearable device, cause the computer device to perform operations corresponding to any of A1-A22.

(D1) In accordance with some embodiments, a method of operating a wrist-wearable device, including operations that correspond to any of A1-A22.

(E1) A wrist-wearable device configured to perform or cause performance of the operations of any one of A1-A22.

(F1) An intermediary processing device configured to perform or cause performance of the operations of any one of A1-A22.

Figure 8B illustrates a diagram of relative timing for invoking an AI agent at a wrist-wearable device, in accordance with some embodiments. Figure 8B illustrates example operations performed at the wrist-wearable device 120 (Figures 1A-1H) and/or communicatively coupled devices. For example, a user 110 can provide a user input 820 at a first point in time. The user input 820 is provided to a speech assistant on the wrist-wearable device 120 that is configures to process the user input 820 to determine a speech to text translation 822 and perform intent detection 824. The speech to text translation 822 and detected intent (output from intent detection 824) are used for providing instructions to open camera 812 and capture an image 826. The captured image 826 is provided to an optical character recognition (OCR) module 814 for HAPTIC detection 828 (e.g., a process for identifying sub-regions of an image including text). The captured image 826 is also used for thumbnail generation. Thumbnail transfer 830, text transfer 832, and post-HAPTIC image transfer 834 are preformed, in part, using a MWA 816 service. The MWA 816 service transfer the thumbnail, text, and post-HAPTIC image to a sever (operation 836). A multi-modal large language model (MM-LLM) server 818 performs LLM processing 838 on the thumbnail, text, and post-HAPTIC image and transfers 840 an output to the wrist-wearable device 120. The wrist-wearable device 120 performs UI renders 842 and/or text to speech 844. Additionally, the wrist-wearable device 120 provides a text output 846.

In some embodiments, to reduce a user-perceived latency, one or more operations can be performed at the wrist-wearable device 120. The user-perceived latency is the time between the user query and a received dialogue message or response. For example, in some embodiments, the wrist-wearable device 120 can include a small multi-modal language model that can process the thumbnail, text, and post-HAPTIC image for simpler tasks without having to use the MM-LLM server 818. In some embodiments, generation of dialogue messages (and/or suggested user queries) by the AI agent can have a user-perceived latency no greater than 10 seconds. In some embodiments, the user-perceived latency is no greater than 8 seconds. Alternatively, in some embodiments, the user-perceived latency is no greater than 5 seconds. In some embodiments, one or more operations described above can be optimized to substantially minimize a user-perceived latency.

### Examples of a User Invoking an AI Agent with Respect to Real-World Objects

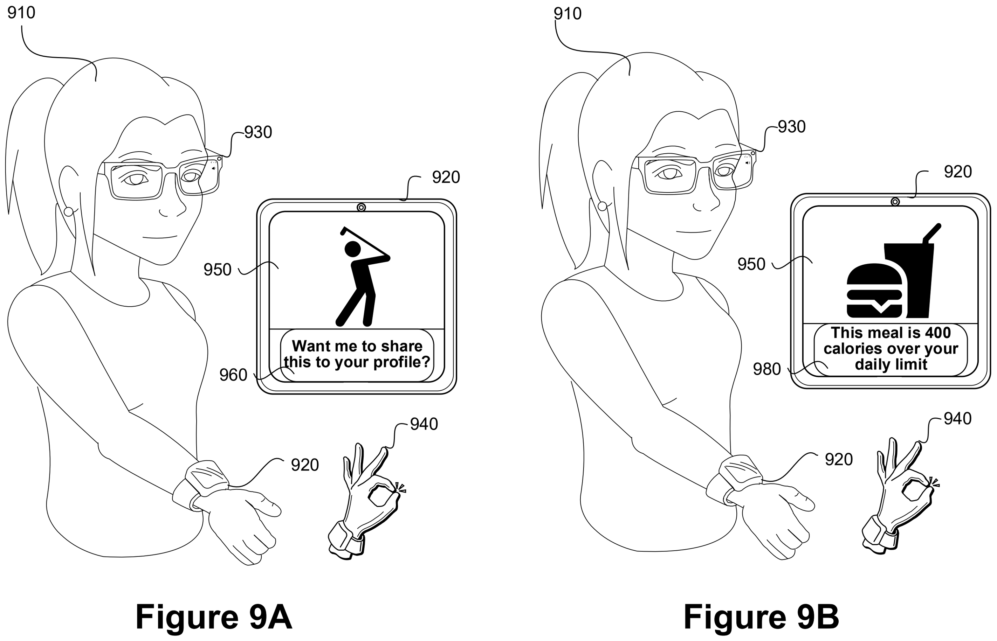

Figures 9A-14 illustrate examples of a user 910 (e.g., the user 110, as described in reference to Figures 1A-8B) performing one or more user inputs invoking an AI agent at a wrist-wearable device 920 (e.g., the wrist-wearable device 120, as described in reference to Figures 1A-8B), in accordance with some embodiments. In accordance with some embodiments, the wrist-wearable device 920 is communicatively coupled to a head-wearable device 930 (e.g., the head-wearable device 130, as described in reference to Figures 1A-8B) and/or another device including one or more processors (e.g., a handheld intermediary processing device, a smartphone, a server device, etc.). In some embodiments, the operations of the AI agent are executed at one or more of the wrist-wearable device 920, the head-wearable device 930, and/or the other device. In some embodiments, the one or more user inputs include one or more hand gestures (e.g., an index finger-pinch gesture) detected at one or more biopotential sensors (e.g., one or more electromyography (EMG) sensors) of the wrist-wearable device 920 and/or one or more cameras of the head-wearable device 930, one or more voice commands (e.g., "Hey AI, capture.") captured at one or more microphones of the wrist-wearable device 920 and/or the head-wearable device 930, one or more touch inputs captured at one or more touch input surfaces (e.g., a touch-screen and/or one or more buttons) of the wrist-wearable device 920 and/or the head-wearable device 930, and/or one or more gaze inputs captured at one or more gaze-tracking devices (e.g., one or more eye-tracking cameras and/or a combination of inertial measurement unit (IMU) sensors and the one or more cameras) of the head-wearable device 930. In some embodiments, the camera of the head-wearable device 930 captures a field of view of the user 910.

Figures 9A and 9B illustrate the user 910 invoking the AI agent at the wrist-wearable device 920 by performing a first user input 940 (e.g., an index finger-pinch gesture), in accordance with some embodiments. As illustrated in Figure 9A, the user 910 performs the first user input 940, and, in response to the first user input 940, the one or more cameras of the head-wearable device 930 captures first image data, and the first image data is displayed at one or more displays 950 of the wrist-wearable device 920. In some embodiments, the first image data includes one or more first real-world objects (e.g., a golfer, as illustrated in Figure 9A). In some embodiments, a representation of the one or more first real-world objects (e.g., at least a portion of the first image data) is displayed at the one or more displays 950 of the wrist-wearable device 920. In some embodiments, the first image data is provided to the AI agent, and the AI agent generates a first response 960. In some embodiments, the first response 960 is generated based on one or more of an object type of the one or more first real-world objects and a set of pre-defined user-specific preferences associated with the object type. For example, an object type is a person, the one or more first real-world objects is one or more golfers, and the pre-defined user-specific preference is a plurality of social media accounts the user is logged into on the head-wearable device 930, the wrist-wearable device 920, and/or another electronic device. In some embodiments, a visual representation of the selected set of pre-defined user-specific preferences is presented at the one or more displays 950 of the wrist-wearable device 920. In some embodiments, the representation of the one or more first real-world objects and the first response 960 are displayed at the one or more displays 950 of the wrist-wearable device 920. For example, as illustrated in Figure 9A, in response to the first user input 940, the one or more cameras of the head-wearable device 920 capture the first image data of a golfer and the wrist-wearable device 920 displays a representation of the first image data and the first response 960 "Want me to share this to your profile?" at the one or more displays 950. In some embodiments, the wrist-wearable device 930 presents the representation of the one or more first real-world objects and the first response 960 based on positional data indicating a user intent to wake the wrist-wearable device 920. For example, the presentation of the representation of the one or more first real-world objects and the first response 960 may occur in response to the user 910 raising the wrist-wearable device 920 in such a manner that the one or more displays 950 is within a field of view of the user 910.

Figure 9B illustrates another example of the user 910 performing the first user input 940 to invoke the AI agent, in accordance with some embodiments. Upon performance of the first user input 940, the camera of the head-wearable device 930 captures second image data, and the second image data is presented at the one or more displays 950 of the wrist-wearable device 920. In some embodiments, the second image data includes one or more second real-world objects (e.g., a meal, as illustrated in Figure 9B), distinct from the one or more first real-world objects. In some embodiments, the second image data is provided to the AI agent, and the AI agent generates a second response 980, distinct from the first response 960. In some embodiments, the second response 980 generated based on a second object type of the one or more second real-world objects and at least one second pre-defined user-specific preference, distinct from the set of pre-defined user-specific preferences, associated with the second object type. In some embodiments, a representation of the one or more second real-world objects (e.g., at least a portion of the second image data) and the second response 980 are displayed at the one or more displays 950 of the wrist-wearable device 920 (e.g., a photo is taken of a meal and the wrist-wearable device 920 displays, "This meal is 400 calories over your daily limit").

In some embodiments, the first image data and/or the second image data further includes one or more additional real-world objects, distinct from the one or more first real-world objects and the one or more second real-world objects. In some embodiments, the first image data and/or the second image data do not include the one or more additional real-world objects. In response to the first response and/or the second response, the user 910 performs a negative feedback response (e.g., a negative feedback in-air hand gesture (e.g., a double-middle finger-pinch gesture) and/or a negative feedback voice command (e.g., "No, not the golfer.") comprising an indication that the user 910 is interested in the one or more additional real-world objects, rather than the one or more first real-world objects and/or the one or more second real-world objects. In some embodiments, upon receiving the negative feedback response, the one or more displays 950 of the wrist-wearable device 920 forgo presenting the representation of the one or more first real-world objects and the first response 960 and/or the representation of the one or more second real-world objects and the second response 980. In some embodiments, upon receiving the negative feedback response, additional image data, distinct from the first image data and/or the second image data, is captured at the one or more cameras of the head-wearable device 930. In some embodiments, a representation of the one or more additional real-world objects and an additional response, generated by the AI agent, is presented at the one or more displays 950 of the wrist-wearable device 920. In some embodiments, the additional response is generated based on an additional object type of the one or more additional real-world objects and an additional selected set of pre-defined user-specific preferences associated with the additional object type of the one or more additional real-world objects.

In some embodiments, the representation of the one or more first real-world objects includes an indication of the first object type and/or the representation of the one or more second real-world objects includes an indication of the second object type. In some embodiments, after presenting the representation of the one or more first real-world objects and the first response 960 and/or the representation of the one or more second real-world objects and the second response 980, the user 910 performs an additional negative feedback response indicating that the first object type and/or the second object type is incorrectly associated with the one or more first real-world objects and/or the one or more second real-world objects, respectively. In some embodiments, the additional negative feedback response is received at the head-wearable device 930, the wrist-wearable device 920, and/or another electronic device. In some embodiments, a revised representation of the one or more first real-world objects and/or the one or more second real-world objects, distinct form the representation of the one or more first real-world objects and/or the representation of the one or more second real-world objects, respectively, as well as a revised first response and/or a revised second response, generated by the AI agent, are presented at the one or more displays 950 of the wrist-wearable device 920. In some embodiments, the revised first response and/or the revised second response is generated based on (i) a revised first object type of the one or more first real-world objects and/or a revised second object type of the one or more second real-world objects, (ii) the first revised object type is distinct from the first object type and/or the second revised object type is distinct from the second object type, and/or (iii) a revised selected set of pre-defined user-specific preferences associated with the revised first object type of the one or more first real-world objects and/or a revised selected set of pre-defined user-specific preferences associated with the revised second object type of the one or more second real-world objects, respectively.

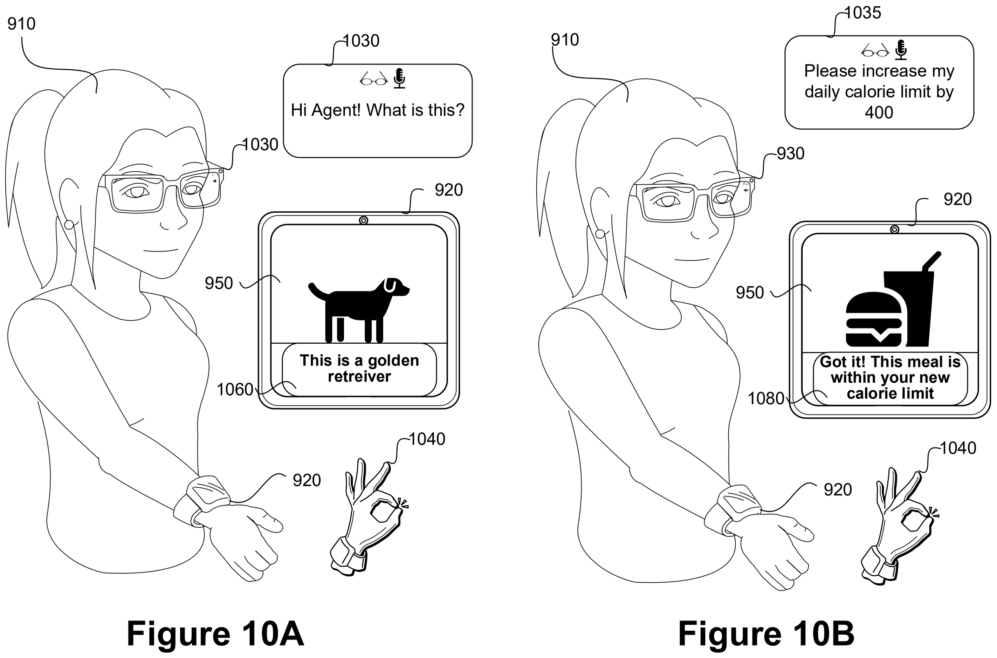

Figures 10A and 10B illustrate the user 910 prompting the AI agent with one or more queries and/or one or more messages at the head-wearable device 930, in accordance with some embodiments. Figure 10A illustrates the user 910 wearing the head-wearable device 930 while performing a first user query 1030 (e.g., "Hi Agent! What is this?"), in accordance with some embodiments. In some embodiments, the user 910 performs an invocation gesture 1040 which is detected by wrist-wearable device 920, and the user 910 performs the first user query 1030 that references one or more third real-world objects. In some embodiments, the invocation gesture 1040 causes one or more microphones of the head-wearable device 930 and/or the wrist-wearable device 920 to cause voice commands performed by the user 910 (e.g., the first user query 1030) to be provided to the AI agent. In response to the first user query 1030, third image data (e.g., including the one or more third objects) is captured at the one or more cameras of the head-wearable device 930, and the third image data is presented at the one or more displays 950 wrist-wearable device 920. In some embodiments, the third image data and the first user query 1030 are provided to the AI agent, which generates a third response 1060 (e.g. "This is a golden retriever") based on a third object type of the one or more third real-world objects, a set of pre-defined user-specific preferences associated with the third object type of the one or more third real-world objects, and the first user query 1030. In some embodiments, a representation of the one or more third real-world objects (e.g., a portion of the third image data) and the third response 1060 are displayed at the one or more displays 950 of the wrist-wearable device 920.

Figure 10B illustrates another example of the user 910 performing the invocation gesture 1040 and a second user query 1035 (e.g. "Please increase my daily calorie limit by 400") that references one or more fourth real-world objects (e.g. a meal). In response to the second user query 1035, fourth image data is captured at the camera of the head-wearable device 930, and the fourth image data is presented at the wrist-wearable device 920. In some embodiments, the fourth image data and the second user query 1035 are provided to the AI agent, and the AI agent generates a fourth response 1080 (e.g. "Got it! This meal is within your new calorie limit"). In some embodiments, the fourth response 1080 is generated based on a fourth object type of the one or more fourth real-world objects, a set of pre-defined user-specific preferences associated with the fourth object type, and the second user query 1035. As an example, as illustrated in Figure 10B, the a set of pre-defined user-specific preferences includes a daily calorie limit. In some embodiments, a representation of the one or more fourth real-world objects and the fourth response 1080 are displayed at the one or more displays 950 of the wrist-wearable device 920.

Figures 11A and 11B illustrate the user 910 performing user inputs to invoke the AI agent at the wrist-wearable device 920 and/or the head-wearable device 930, in accordance with some embodiments. Figure 11A illustrates the user 910 wearing the head-wearable device 930. The user 910 performs a fifth user input 1140 (e.g., an index-finger pinch gesture) while viewing one or more fifth real-world objects. In response to the user 910 performing the fifth user input 1140, fifth image data is captured at the one or more cameras of the head-wearable device 930, the fifth image data including the one or more fifth real-world objects, and the fifth image data is presented at the wrist-wearable device 920. In some embodiments, the fifth image data is provided to the AI agent, which generates a fifth response 1160, wherein the fifth response 1160 is an input suggestion for performing one or more tasks (e.g. "Do you want me to identify this?"). Figure 11B illustrates the user 910 performing a follow-up user input 1161 (e.g. "Yes, please identify this") in response to the input suggestion of the fifth response 1160, in accordance with some embodiments. The follow-up user input 1161 may include a confirmation of the input suggestion of the fifth response 1160 and/or a refusal of the input suggestion of the fifth response 1160. In accordance with a determination that the follow-up user input 1161 includes a confirmation of the input suggestion of the fifth response 1160, the one or more tasks are performed. In some embodiments, the one or more tasks are performed by at least one of the head-wearable device 930, the wrist-wearable device 920, and/or the AI agent. In some embodiments, the one or more tasks comprise the AI agent generating a sixth response 1180 (e.g. "This is a golden retriever") based on a fifth object type of the one or more fifth real-world objects and a set of pre-defined user-specific preferences associated with the fifth object type. In some embodiments, a representation of the one or more fifth real-world objects and the sixth response 1180 are displayed at the one or more displays 950 of the wrist-wearable device 920. In some embodiments, the one or more tasks are one or more commands to be performed by one or more of the head-wearable device 920 and/or the wrist-wearable device 930.

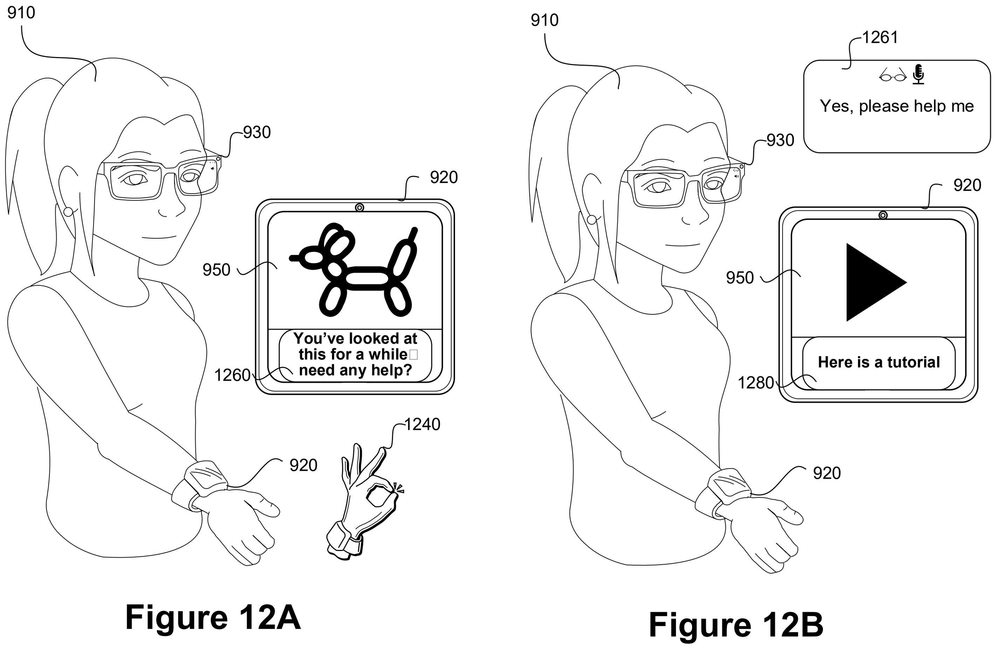

Figures 12A and 12B illustrate another example of the user 910 invoking the AI agent at the wrist-wearable device 920, in accordance with some embodiments. Figure 12A illustrates the user 910 performing a sixth user input 1240, in accordance with some embodiments. In some embodiments, in response to the user 910 performing the sixth user input 1240, the one or more cameras on the head-wearable device 930 continuously capture sixth image data, the sixth image data including one or more sixth real-world objects. In some embodiments, in accordance with the one or more sixth real-world objects being captured within the sixth image data for a threshold amount of time (e.g., two seconds, five seconds, etc.), the sixth image data is provided to the AI agent. The AI agent generates a seventh response 1260 (e.g. "You've looked at this for a while, need any help?") based on a sixth object type of the one or more sixth real-world objects and a set of pre-defined user-specific preferences associated with the sixth object type of the one or more sixth real-world objects. In some embodiments, a representation of the one or more sixth real-world objects and the seventh response 1260 are displayed at the one or more displays 950 of the wrist-wearable device 920. Figure 11B illustrates, the user 910 performing a second follow-up user input 1261 (e.g. "Yes, please help me") from the user 910, in accordance with some embodiments. In some embodiments, the second follow-up user input 1261 comprising a request to perform one or more second commands. In some embodiments, in response to the second follow-up user input 1261, the head-wearable device 930, the wrist-wearable device 920, and/or the AI agent performs the one or more commands. In some embodiments, the one or more commands comprise the AI agent generating an eighth response 1280 (e.g. "Here is a tutorial") based on the sixth object type of the one or more sixth real-world objects and the a set of pre-defined user-specific preferences associated with the sixth object type. In some embodiments, the a set of pre-defined user-specific preferences is a plurality of user accessibility settings. In some embodiments, a representation of the one or more sixth real-world objects and the eighth response 1280 are displayed at the one or more displays 950 of the wrist-wearable device 920. In some embodiments, the AI agent provides additional media (e.g., a link, a video, as illustrated in Figure 12B, an image, etc.) responsive to the user request, and the additional media is presented at the one or more displays 950 of the wrist-wearable device 1220.

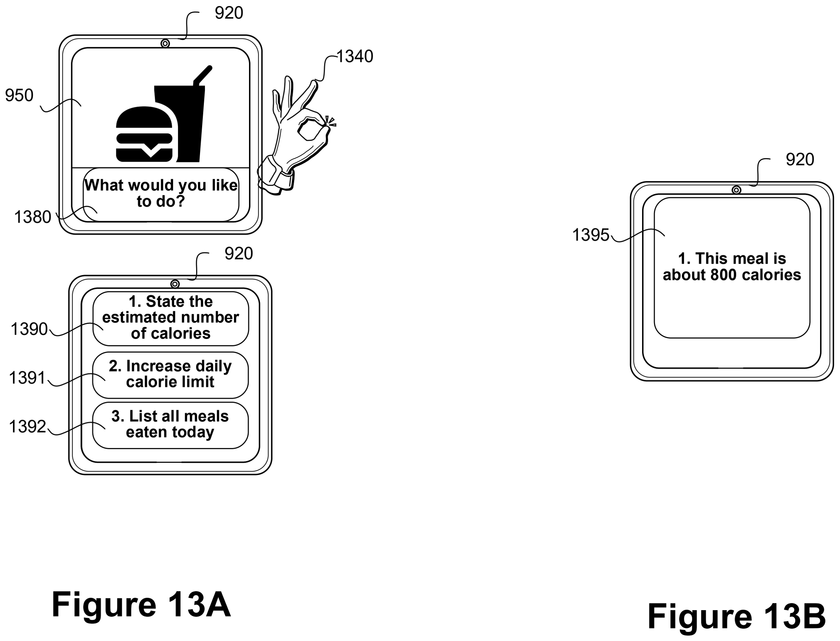

Figures 13A and 13B illustrate the user 910 performing user inputs to interact with the AI agent at the wrist-wearable device 910, in accordance with some embodiments. Figure 13A shows a watch-face user interface presented at the one or more displays 950 of the wrist-wearable device 920. The watch-face user interface includes a prompt 1380 ("What would you like to do?") and a representation of one or more seventh real-world objects. In some embodiments, the representation of the one or more seventh real-world objects is captured at the head-wearable device 930. In some embodiments, the one or more seventh real-world object is a meal. In some embodiments, after the prompt 1380 is presented, the wrist-wearable device 920 further presents one or more options. In some embodiments, the one or options include, at least, a first option 1390 ("1. State the estimated number of calories"), a second option 1391 ("2. Increase daily calorie limit"), and a third option 1392 ("3. List all meals eaten today"). In Figure 13A, the user 910 performs a seventh user input 1340 directed at the one or more options in the watch-face user interface. In response to the seventh user input 1340, the wrist-wearable device 920 presents an updated watch-face user interface including option-selection response 1395 (e.g., as illustrated in Figure 13B), wherein option-selection response 1395 is based on whether the seventh user input 1340 is directed at the first option 1390, the second option 1391, and/or the third option 1392.

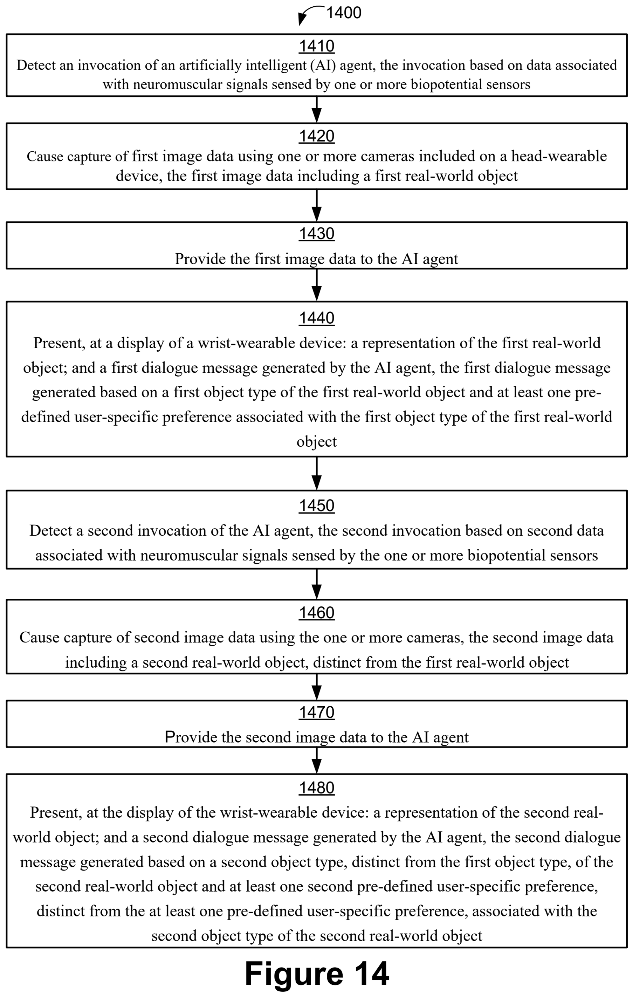

Figure 14 illustrates a flow diagram of a method of invoking an AI agent at a wrist-wearable device, in accordance with some embodiments. Operations (e.g., steps) of the method 1400 can be performed by one or more processors (e.g., central processing unit and/or MCU) of a system (e.g., a wrist-wearable device 120). At least some of the operations shown in Figure 14 correspond to instructions stored in a computer memory or computer-readable storage medium (e.g., storage, RAM, and/or memory, such as memory of a wrist-wearable device 1526; Figure 15A). Operations of the method 1400 can be performed by a single device alone or in conjunction with one or more processors and/or hardware components of another communicatively coupled device (e.g., a handheld intermediary processing device 1542, head-wearable device 1528, and/or other devices described below in reference to Figures 15A-15C) and/or instructions stored in memory or computer-readable medium of the other device communicatively coupled to the system. In some embodiments, the various operations of the methods described herein are interchangeable and/or optional, and respective operations of the methods are performed by any of the aforementioned devices, systems, or combination of devices and/or systems. For convenience, the method operations will be described below as being performed by particular component or device, but should not be construed as limiting the performance of the operation to the particular device in all embodiments.

(G1) Figure 14 shows a flow chart of a method 1400 of invoking an AI agent at a wrist-wearable device, in accordance with some embodiments. The method 1400 occurs at a wrist-wearable device with one or more of a display, an imaging device, touch input surfaces, mechanical input elements, a microphone, speakers, biopotential sensors (e.g., EMG sensors), and/or other components described in reference to Figure 15A. In some embodiments, the method 1400 includes, detecting (1410) an invocation of an artificially intelligent (AI) agent, the invocation based on data associated with neuromuscular signals sensed by one or more biopotential sensors, causing capture of (1420) first image data using one or more cameras included on a head-wearable device, the first image data including a first real-world object, providing (1430) the first image data to the AI agent, presenting (1440), at a display of a wrist-wearable device: a representation of the first real-world object; and a first dialogue message generated by the AI agent, the first dialogue message generated based on a first object type of the first real-world object and a set of pre-defined user-specific preferences associated with the first object type of the first real-world object. The method 1400 includes, detecting (1450) a second invocation of the AI agent, the second invocation based on second data associated with neuromuscular signals sensed by the one or more biopotential sensors, cause (1460) capture of second image data using the one or more cameras, the second image data including a second real-world object, distinct from the first real-world object, providing (1470) the second image data to the AI agent, and present (1480), at the display of the wrist-wearable device: a representation of the second real-world object; and a second dialogue message generated by the AI agent, the second dialogue message generated based on a second object type, distinct from the first object type, of the second real-world object and at least one second pre-defined user-specific preference, distinct from the a set of pre-defined user-specific preferences, associated with the second object type of the second real-world object.

(G2) In some embodiments of G1, the first object type is food, the a set of pre-defined user-specific preferences is a daily amount of calories; the first dialogue message describes an estimated amount of calories the first real-world object contains, the second object type is people, the at least one second pre-defined user-specific preference is a plurality of social media platforms, and the second dialogue message is a suggestion of at least one social media platform in the plurality of social media platforms to share the second image data to. For example, as shown in at least Figures 9A and 9B a user (910) wearing a head-wearable device (930) and a wrist-wearable device (920) can invoke an AI agent with a gesture, capture image data of a first real-world object (e.g. a meal) and of a second real-world object (e.g. a person) and receive distinct responses from an AI agent based on the respective real-world objects and the pre-defined user-specific preferences of the user regarding the respective object types of the respective real-world objects.

(G3) In some embodiments of G1-G2, the a set of pre-defined user-specific preferences is at least one of a goal, a plan, and a fact about a user of the displayless head-wearable device (930). For example, in Figures 9B, 13A, and 13B a user wearing a wrist-wearable device (920) has a daily calorie limit (i.e. a goal).

(G4) In some embodiments of G1-G3, before providing the first image data to the AI agent, receive a user message regarding the first real-world object and provide the user (910) message to the AI agent. In some embodiments, the first dialogue message is further generated based on the user message. For example, as shown in Figure 10A, a user (910) wearing a head-wearable device (930) and a wrist-wearable device (920) provides a query and captures image data regarding a real-world object, and the AI agent generates a dialogue message based on the query and the object type of the real-world object (e.g. the breed of a dog).

(G5) In some embodiments of G1-G4, the user message modifies the a set of pre-defined user-specific preferences. For example, as shown in Figure 10B, a user (910) wearing a head-wearable device (930) and a wrist-wearable device (920) updates a user-specific goal (e.g. the daily calorie limit of the user).

(G6) In some embodiments of G1-G5, the user message comprises a request to identify the first real-world object and the first dialogue message includes an identification of the first real-world object. For example, as shown in Figure 10A, a user (910) wearing a head-wearable device (930) and a wrist-wearable device (920) provides a query and captures image data regarding a real-world object, and the AI agent generates a dialogue message based on the query and the object type of the real-world object (e.g. the breed of a dog).

(G7) In some embodiments of G1-G6, the first image data further includes a different real-world object, distinct from the first real-world object and the user message comprises an indication that the user (910) is interested in one or more different real-world objects, not the first real-world object. In some embodiments, forgo presentation of the representation of the first real-world object and the first dialogue message, and present, at the display (950) of the wrist-wearable device (920): a representation of one or more different real-world objects and a different dialogue message generated by the AI agent, the different dialogue message generated based on a different object type of one or more different real-world objects and a different selected set of pre-defined user-specific preferences associated with the different object type of one or more different real-world objects.

(G8) In some embodiments of G1-G7, the user message comprises an indication that the user (910) is interested in an additional real-world object, distinct from the first real-world object, wherein one or more additional real-world objects is not included in the first image data. In some embodiments, cause the displayless head-wearable device (930) to capture additional image data using the one or more cameras included on the displayless head-wearable device (930), the additional image data including one or more additional real-world objects, provide the additional image data to the AI agent, present, at the display of the wrist-wearable device (920), an additional representation of one or more additional real-world objects and an additional dialogue message generated by the AI agent, the additional dialogue message generated based on an additional object type of one or more additional real-world objects and an additional selected set of pre-defined user-specific preferences associated with the additional object type of one or more additional real-world objects.

(G9) In some embodiments of G1-G8, the representation of the first real-world object includes an indication of the first object type. In some embodiments, after presenting the representation of the first real-world object and the first dialogue message on the display of the wrist-wearable device (920), receive a user input indicating that the first object type is incorrectly associated with the first real-world object, present, at the display (950) of the wrist-wearable device (920): a revised representation of the first real-world object, distinct from the representation of the first real-world object and a revised dialogue message generated by the AI agent, the revised dialogue message generated based on a revised object type of the first real-world object, the revised object type distinct from the first object type, and a revised selected set of pre-defined user-specific preferences associated with the revised object type of the first real-world object.

(G10) In some embodiments of G1-G9, the first dialogue message comprises a suggestion to perform a follow-up user input. In some embodiments, receive a user input comprising the follow-up user input and perform a command based on the follow-up user input.

(G11) In some embodiments of G1-G10, detect a third invocation of the AI agent, the third invocation based on third data associated with neuromuscular signals sensed by the one or more biopotential sensors, in response to detecting the third invocation, cause the displayless head-wearable device (930) to capture third image data using the one or more cameras, the third image data including a third real-world object, distinct from the first real-world object and the second real-world object. In accordance with the third real-world object being captured for a threshold amount of time: provide the third image data to the AI agent, present, at the display (950) of the wrist-wearable device (920): a representation of the third real-world object, and a third dialogue message generated by the AI agent, the third dialogue message generated based on a third object type, distinct from the first object type and the second object type, of the third real-world object and a third pre-defined user-specific preference associated with the third object type of the third real-world object. For example, as shown in Figure 12A, a user (910) wearing a head-wearable device (930) and a wrist-wearable device (920) is prompted by an AI agent after a threshold amount of time whether the user requires assistance.

(G12) In some embodiments of G1-G11, the first dialogue message comprises an ordered list of messages, an order of the ordered list of messages determined by the AI agent, ordered based on a likelihood that a user (910) of the wrist-wearable device (920) selects messages of the ordered list of messages. For example, as shown in Figure 13A, an AI agent generates an ordered list of messages on a display (950) of a wrist-wearable device (920).

(G13) In some embodiments of G1-G12, the displayless head-wearable device (930) is a pair of displayless smart glasses and the wrist-wearable device (920) is a smart watch.

(G14) In some embodiments of G1-G13, the one or more cameras capture a field of view of a user (910) of the displayless head-wearable device (930).

(H1) In accordance with some embodiments, a system that includes one or more wrist-wearable devices and a pair of augmented-reality glasses, and the system is configured to perform operations corresponding to any of G1-G14.

(11) In accordance with some embodiments, a non-transitory computer readable storage medium including instructions that, when executed by a computing device in communication with a head-wearable device, cause the computer device to perform operations corresponding to any of G1- G14.

(J1) In accordance with some embodiments, a method of operating a wrist-wearable device, including operations that correspond to any of G1- G14.

(K1) A wrist-wearable device configured to perform or cause performance of the operations of any one of claims 1-20

(L1) An intermediary processing device configured to perform or cause performance of the operations of any one of claims 1-20.

### Example Extended-Reality Systems

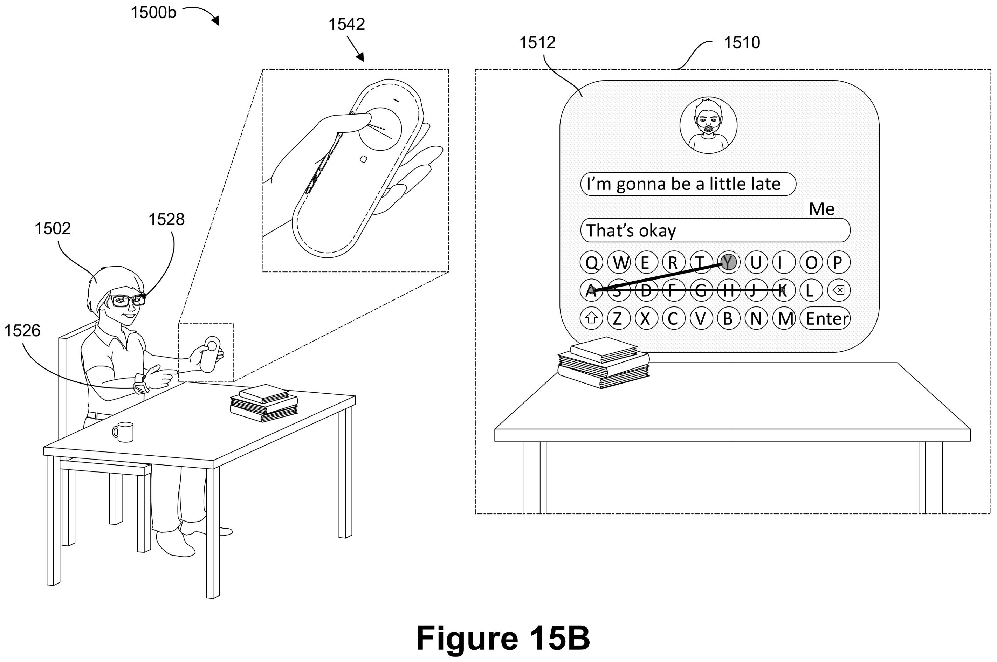

Figures 15A 15B, 15C-1, and 15C-2, illustrate example XR systems that include AR and MR systems, in accordance with some embodiments. Figure 15A shows a first XR system 1500a and first example user interactions using a wrist-wearable device 1526, a head-wearable device (e.g., AR device 1528), and/or a HIPD 1542. Figure 15B shows a second XR system 1500b and second example user interactions using a wrist-wearable device 1526, AR device 1528, and/or an HIPD 1542. Figures 15C-1 and 15C-2 show a third MR system 1500c and third example user interactions using a wrist-wearable device 1526, a head-wearable device (e.g., an MR device such as a VR device), and/or an HIPD 1542. As the skilled artisan will appreciate upon reading the descriptions provided herein, the above-example AR and MR systems (described in detail below) can perform various functions and/or operations.

The wrist-wearable device 1526, the head-wearable devices, and/or the HIPD 1542 can communicatively couple via a network 1525 (e.g., cellular, near field, Wi-Fi, personal area network, wireless LAN). Additionally, the wrist-wearable device 1526, the head-wearable device, and/or the HIPD 1542 can also communicatively couple with one or more servers 1530, computers 1540 (e.g., laptops, computers), mobile devices 1550 (e.g., smartphones, tablets), and/or other electronic devices via the network 1525 (e.g., cellular, near field, Wi-Fi, personal area network, wireless LAN). Similarly, a smart textile-based garment, when used, can also communicatively couple with the wrist-wearable device 1526, the head-wearable device(s), the HIPD 1542, the one or more servers 1530, the computers 1540, the mobile devices 1550, and/or other electronic devices via the network 1525 to provide inputs.

Turning to Figure 15A, a user 1502 is shown wearing the wrist-wearable device 1526 and the AR device 1528 and having the HIPD 1542 on their desk. The wrist-wearable device 1526, the AR device 1528, and the HIPD 1542 facilitate user interaction with an AR environment. In particular, as shown by the first AR system 1500a, the wrist-wearable device 1526, the AR device 1528, and/or the HIPD 1542 cause presentation of one or more avatars 1504, digital representations of contacts 1506, and virtual objects 1508. As discussed below, the user 1502 can interact with the one or more avatars 1504, digital representations of the contacts 1506, and virtual objects 1508 via the wrist-wearable device 1526, the AR device 1528, and/or the HIPD 1542. In addition, the user 1502 is also able to directly view physical objects in the environment, such as a physical table 15215, through transparent lens(es) and waveguide(s) of the AR device 1528. Alternatively, an MR device could be used in place of the AR device 1528 and a similar user experience can take place, but the user would not be directly viewing physical objects in the environment, such as table 15215, and would instead be presented with a virtual reconstruction of the table 15215 produced from one or more sensors of the MR device (e.g., an outward facing camera capable of recording the surrounding environment).

The user 1502 can use any of the wrist-wearable device 1526, the AR device 1528 (e.g., through physical inputs at the AR device and/or built-in motion tracking of a user's extremities), a smart-textile garment, externally mounted extremity tracking device, the HIPD 1542 to provide user inputs, etc. For example, the user 1502 can perform one or more hand gestures that are detected by the wrist-wearable device 1526 (e.g., using one or more EMG sensors and/or IMUs built into the wrist-wearable device) and/or AR device 1528 (e.g., using one or more image sensors or cameras) to provide a user input. Alternatively, or additionally, the user 1502 can provide a user input via one or more touch surfaces of the wrist-wearable device 1526, the AR device 1528, and/or the HIPD 1542, and/or voice commands captured by a microphone of the wrist-wearable device 1526, the AR device 1528, and/or the HIPD 1542. The wrist-wearable device 1526, the AR device 1528, and/or the HIPD 1542 include an Al agent to help the user in providing a user input (e.g., completing a sequence of operations, suggesting different operations or commands, providing reminders, confirming a command). For example, the Al agent can be invoked through an input occurring at the AR device 1528 (e.g., via an input at a temple arm of the AR device 1528). In some embodiments, the user 1502 can provide a user input via one or more facial gestures and/or facial expressions. For example, cameras of the wrist-wearable device 1526, the AR device 1528, and/or the HIPD 1542 can track the user 1502's eyes for navigating a user interface.

The wrist-wearable device 1526, the AR device 1528, and/or the HIPD 1542 can operate alone or in conjunction to allow the user 1502 to interact with the AR environment. In some embodiments, the HIPD 1542 is configured to operate as a central hub or control center for the wrist-wearable device 1526, the AR device 1528, and/or another communicatively coupled device. For example, the user 1502 can provide an input to interact with the AR environment at any of the wrist-wearable device 1526, the AR device 1528, and/or the HIPD 1542, and the HIPD 1542 can identify one or more back-end and front-end tasks to cause the performance of the requested interaction and distribute instructions to cause the performance of the one or more back-end and front-end tasks at the wrist-wearable device 1526, the AR device 1528, and/or the HIPD 1542. In some embodiments, a back-end task is a background-processing task that is not perceptible by the user (e.g., rendering content, decompression, compression, application-specific operations), and a front-end task is a user-facing task that is perceptible to the user (e.g., presenting information to the user, providing feedback to the user). The HIPD 1542 can perform the back-end tasks and provide the wrist-wearable device 1526 and/or the AR device 1528 operational data corresponding to the performed back-end tasks such that the wrist-wearable device 1526 and/or the AR device 1528 can perform the front-end tasks. In this way, the HIPD 1542, which has more computational resources and greater thermal headroom than the wrist-wearable device 1526 and/or the AR device 1528, performs computationally intensive tasks and reduces the computer resource utilization and/or power usage of the wrist-wearable device 1526 and/or the AR device 1528.

In the example shown by the first AR system 1500a, the HIPD 1542 identifies one or more back-end tasks and front-end tasks associated with a user request to initiate an AR video call with one or more other users (represented by the avatar 1504 and the digital representation of the contact 1506) and distributes instructions to cause the performance of the one or more back-end tasks and front-end tasks. In particular, the HIPD 1542 performs back-end tasks for processing and/or rendering image data (and other data) associated with the AR video call and provides operational data associated with the performed back-end tasks to the AR device 1528 such that the AR device 1528 performs front-end tasks for presenting the AR video call (e.g., presenting the avatar 1504 and the digital representation of the contact 1506).

In some embodiments, the HIPD 1542 can operate as a focal or anchor point for causing the presentation of information. This allows the user 1502 to be generally aware of where information is presented. For example, as shown in the first AR system 1500a, the avatar 1504 and the digital representation of the contact 1506 are presented above the HIPD 1542. In particular, the HIPD 1542 and the AR device 1528 operate in conjunction to determine a location for presenting the avatar 1504 and the digital representation of the contact 1506. In some embodiments, information can be presented within a predetermined distance from the HIPD 1542 (e.g., within five meters). For example, as shown in the first AR system 1500a, virtual object 1508 is presented on the desk some distance from the HIPD 1542. Similar to the above example, the HIPD 1542 and the AR device 1528 can operate in conjunction to determine a location for presenting the virtual object 1508. Alternatively, in some embodiments, presentation of information is not bound by the HIPD 1542. More specifically, the avatar 1504, the digital representation of the contact 1506, and the virtual object 1508 do not have to be presented within a predetermined distance of the HIPD 1542. While an AR device 1528 is described working with an HIPD, an MR headset can be interacted with in the same way as the AR device 1528.

User inputs provided at the wrist-wearable device 1526, the AR device 1528, and/or the HIPD 1542 are coordinated such that the user can use any device to initiate, continue, and/or complete an operation. For example, the user 1502 can provide a user input to the AR device 1528 to cause the AR device 1528 to present the virtual object 1508 and, while the virtual object 1508 is presented by the AR device 1528, the user 1502 can provide one or more hand gestures via the wrist-wearable device 1526 to interact and/or manipulate the virtual object 1508. While an AR device 1528 is described working with a wrist-wearable device 1526, an MR headset can be interacted with in the same way as the AR device 1528.

### Integration of Artificial Intelligence with XR Systems

Figure 15A illustrates an interaction in which an Al agent can assist in requests made by a user 1502. The Al agent can be used to complete open-ended requests made through natural language inputs by a user 1502. For example, in Figure 15A the user 1502 makes an audible request 1544 to summarize the conversation and then share the summarized conversation with others in the meeting. In addition, the Al agent is configured to use sensors of the XR system (e.g., cameras of an XR headset, microphones, and various other sensors of any of the devices in the system) to provide contextual prompts to the user for initiating tasks.

Figure 15A also illustrates an example neural network 1552 used in Artificial Intelligence applications. Uses of Artificial Intelligence (AI) are varied and encompass many different aspects of the devices and systems described herein. AI capabilities cover a diverse range of applications and deepen interactions between the user 1502 and user devices (e.g., the AR device 1528, an MR device 1532, the HIPD 1542, the wrist-wearable device 1526). The Al discussed herein can be derived using many different training techniques. While the primary Al model example discussed herein is a neural network, other Al models can be used. Non-limiting examples of Al models include artificial neural networks (ANNs), deep neural networks (DNNs), convolution neural networks (CNNs), recurrent neural networks (RNNs), large language models (LLMs), long short-term memory networks, transformer models, decision trees, random forests, support vector machines, k-nearest neighbors, genetic algorithms, Markov models, Bayesian networks, fuzzy logic systems, and deep reinforcement learnings, etc. The Al models can be implemented at one or more of the user devices, and/or any other devices described herein. For devices and systems herein that employ multiple Al models, different models can be used depending on the task. For example, for a natural-language Al agent, an LLM can be used and for the object detection of a physical environment, a DNN can be used instead.

In another example, an Al agent can include many different Al models and based on the user's request, multiple Al models may be employed (concurrently, sequentially or a combination thereof). For example, an LLM-based Al model can provide instructions for helping a user follow a recipe and the instructions can be based in part on another Al model that is derived from an ANN, a DNN, an RNN, etc. that is capable of discerning what part of the recipe the user is on (e.g., object and scene detection).

As Al training models evolve, the operations and experiences described herein could potentially be performed with different models other than those listed above, and a person skilled in the art would understand that the list above is non-limiting.

A user 1502 can interact with an Al model through natural language inputs captured by a voice sensor, text inputs, or any other input modality that accepts natural language and/or a corresponding voice sensor module. In another instance, input is provided by tracking the eye gaze of a user 1502 via a gaze tracker module. Additionally, the Al model can also receive inputs beyond those supplied by a user 1502. For example, the Al can generate its response further based on environmental inputs (e.g., temperature data, image data, video data, ambient light data, audio data, GPS location data, inertial measurement (i.e., user motion) data, pattern recognition data, magnetometer data, depth data, pressure data, force data, neuromuscular data, heart rate data, temperature data, sleep data) captured in response to a user request by various types of sensors and/or their corresponding sensor modules. The sensors' data can be retrieved entirely from a single device (e.g., AR device 1528) or from multiple devices that are in communication with each other (e.g., a system that includes at least two of an AR device 1528, an MR device 1532, the HIPD 1542, the wrist-wearable device 1526, etc.). The Al model can also access additional information (e.g., one or more servers 1530, the computers 1540, the mobile devices 1550, and/or other electronic devices) via a network 1525.

A non-limiting list of Al-enhanced functions includes but is not limited to image recognition, speech recognition (e.g., automatic speech recognition), text recognition (e.g., scene text recognition), pattern recognition, natural language processing and understanding, classification, regression, clustering, anomaly detection, sequence generation, content generation, and optimization. In some embodiments, Al-enhanced functions are fully or partially executed on cloud-computing platforms communicatively coupled to the user devices (e.g., the AR device 1528, an MR device 1532, the HIPD 1542, the wrist-wearable device 1526) via the one or more networks. The cloud-computing platforms provide scalable computing resources, distributed computing, managed Al services, interference acceleration, pre-trained models, APIs and/or other resources to support comprehensive computations required by the Al-enhanced function.

Example outputs stemming from the use of an Al model can include natural language responses, mathematical calculations, charts displaying information, audio, images, videos, texts, summaries of meetings, predictive operations based on environmental factors, classifications, pattern recognitions, recommendations, assessments, or other operations. In some embodiments, the generated outputs are stored on local memories of the user devices (e.g., the AR device 1528, an MR device 1532, the HIPD 1542, the wrist-wearable device 1526), storage options of the external devices (servers, computers, mobile devices, etc.), and/or storage options of the cloud-computing platforms.

The Al-based outputs can be presented across different modalities (e.g., audio-based, visual-based, haptic-based, and any combination thereof) and across different devices of the XR system described herein. Some visual-based outputs can include the displaying of information on XR augments of an XR headset, user interfaces displayed at a wrist-wearable device, laptop device, mobile device, etc. On devices with or without displays (e.g., HIPD 1542), haptic feedback can provide information to the user 1502. An Al model can also use the inputs described above to determine the appropriate modality and device(s) to present content to the user (e.g., a user walking on a busy road can be presented with an audio output instead of a visual output to avoid distracting the user 1502).

### Example Augmented Reality Interaction

Figure 15B shows the user 1502 wearing the wrist-wearable device 1526 and the AR device 1528 and holding the HIPD 1542. In the second AR system 1500b, the wrist-wearable device 1526, the AR device 1528, and/or the HIPD 1542 are used to receive and/or provide one or more messages to a contact of the user 1502. In particular, the wrist-wearable device 1526, the AR device 1528, and/or the HIPD 1542 detect and coordinate one or more user inputs to initiate a messaging application and prepare a response to a received message via the messaging application.

In some embodiments, the user 1502 initiates, via a user input, an application on the wrist-wearable device 1526, the AR device 1528, and/or the HIPD 1542 that causes the application to initiate on at least one device. For example, in the second AR system 1500b the user 1502 performs a hand gesture associated with a command for initiating a messaging application (represented by messaging user interface 1512); the wrist-wearable device 1526 detects the hand gesture; and, based on a determination that the user 1502 is wearing the AR device 1528, causes the AR device 1528 to present a messaging user interface 1512 of the messaging application. The AR device 1528 can present the messaging user interface 1512 to the user 1502 via its display (e.g., as shown by user 1502's field of view 1510). In some embodiments, the application is initiated and can be run on the device (e.g., the wrist-wearable device 1526, the AR device 1528, and/or the HIPD 1542) that detects the user input to initiate the application, and the device provides another device operational data to cause the presentation of the messaging application. For example, the wrist-wearable device 1526 can detect the user input to initiate a messaging application, initiate and run the messaging application, and provide operational data to the AR device 1528 and/or the HIPD 1542 to cause presentation of the messaging application. Alternatively, the application can be initiated and run at a device other than the device that detected the user input. For example, the wrist-wearable device 1526 can detect the hand gesture associated with initiating the messaging application and cause the HIPD 1542 to run the messaging application and coordinate the presentation of the messaging application.

Further, the user 1502 can provide a user input provided at the wrist-wearable device 1526, the AR device 1528, and/or the HIPD 1542 to continue and/or complete an operation initiated at another device. For example, after initiating the messaging application via the wrist-wearable device 1526 and while the AR device 1528 presents the messaging user interface 1512, the user 1502 can provide an input at the HIPD 1542 to prepare a response (e.g., shown by the swipe gesture performed on the HIPD 1542). The user 1502's gestures performed on the HIPD 1542 can be provided and/or displayed on another device. For example, the user 1502's swipe gestures performed on the HIPD 1542 are displayed on a virtual keyboard of the messaging user interface 1512 displayed by the AR device 1528.

In some embodiments, the wrist-wearable device 1526, the AR device 1528, the HIPD 1542, and/or other communicatively coupled devices can present one or more notifications to the user 1502. The notification can be an indication of a new message, an incoming call, an application update, a status update, etc. The user 1502 can select the notification via the wrist-wearable device 1526, the AR device 1528, or the HIPD 1542 and cause presentation of an application or operation associated with the notification on at least one device. For example, the user 1502 can receive a notification that a message was received at the wrist-wearable device 1526, the AR device 1528, the HIPD 1542, and/or other communicatively coupled device and provide a user input at the wrist-wearable device 1526, the AR device 1528, and/or the HIPD 1542 to review the notification, and the device detecting the user input can cause an application associated with the notification to be initiated and/or presented at the wrist-wearable device 1526, the AR device 1528, and/or the HIPD 1542.

While the above example describes coordinated inputs used to interact with a messaging application, the skilled artisan will appreciate upon reading the descriptions that user inputs can be coordinated to interact with any number of applications including, but not limited to, gaming applications, social media applications, camera applications, web-based applications, financial applications, etc. For example, the AR device 1528 can present to the user 1502 game application data and the HIPD 1542 can use a controller to provide inputs to the game. Similarly, the user 1502 can use the wrist-wearable device 1526 to initiate a camera of the AR device 1528, and the user can use the wrist-wearable device 1526, the AR device 1528, and/or the HIPD 1542 to manipulate the image capture (e.g., zoom in or out, apply filters) and capture image data.

While an AR device 1528 is shown being capable of certain functions, it is understood that an AR device can be an AR device with varying functionalities based on costs and market demands. For example, an AR device may include a single output modality such as an audio output modality. In another example, the AR device may include a low-fidelity display as one of the output modalities, where simple information (e.g., text and/or low-fidelity images/video) is capable of being presented to the user. In yet another example, the AR device can be configured with face-facing light emitting diodes (LEDs) configured to provide a user with information, e.g., an LED around the right-side lens can illuminate to notify the wearer to turn right while directions are being provided or an LED on the left-side can illuminate to notify the wearer to turn left while directions are being provided. In another embodiment, the AR device can include an outward-facing projector such that information (e.g., text information, media) may be displayed on the palm of a user's hand or other suitable surface (e.g., a table, whiteboard). In yet another embodiment, information may also be provided by locally dimming portions of a lens to emphasize portions of the environment in which the user's attention should be directed. Some AR devices can present AR augments either monocularly or binocularly (e.g., an AR augment can be presented at only a single display associated with a single lens as opposed presenting an AR augmented at both lenses to produce a binocular image). In some instances, an AR device capable of presenting AR augments binocularly can optionally display AR augments monocularly as well (e.g., for power-saving purposes or other presentation considerations). These examples are non-exhaustive and features of one AR device described above can be combined with features of another AR device described above. While features and experiences of an AR device have been described generally in the preceding sections, it is understood that the described functionalities and experiences can be applied in a similar manner to an MR headset, which is described below in the proceeding sections.

### Example Mixed Reality Interaction

Turning to Figures 15C-1 and 15C-2, the user 1502 is shown wearing the wrist-wearable device 1526 and an MR device 1532 (e.g., a device capable of providing either an entirely VR experience or an MR experience that displays object(s) from a physical environment at a display of the device) and holding the HIPD 1542. In the third AR system 1500c, the wrist-wearable device 1526, the MR device 1532, and/or the HIPD 1542 are used to interact within an MR environment, such as a VR game or other MR/VR application. While the MR device 1532 presents a representation of a VR game (e.g., first MR game environment 1520) to the user 1502, the wrist-wearable device 1526, the MR device 1532, and/or the HIPD 1542 detect and coordinate one or more user inputs to allow the user 1502 to interact with the VR game.

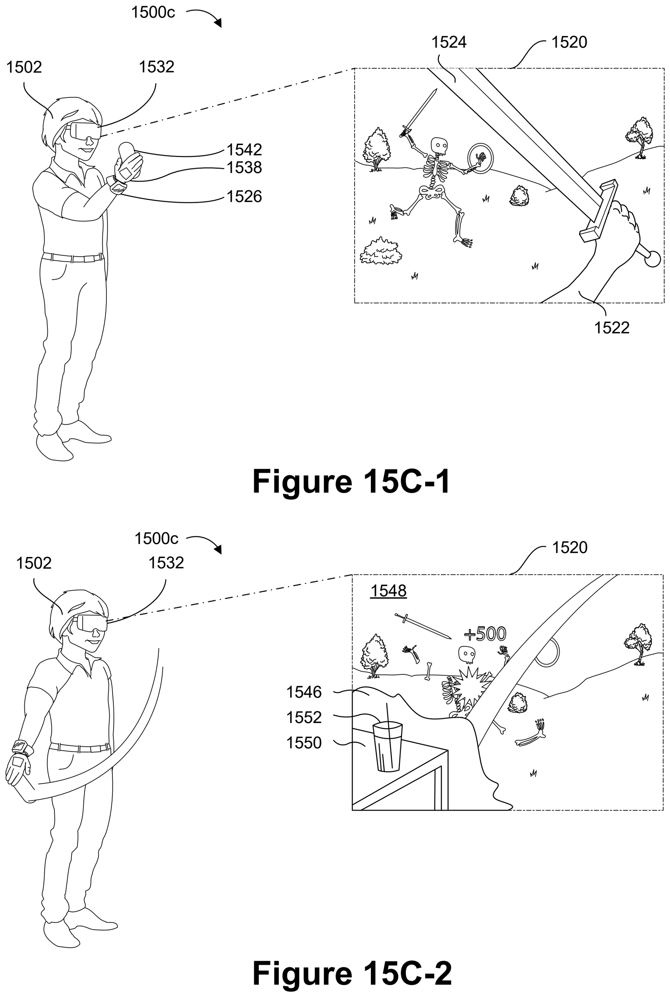

In some embodiments, the user 1502 can provide a user input via the wrist-wearable device 1526, the MR device 1532, and/or the HIPD 1542 that causes an action in a corresponding MR environment. For example, the user 1502 in the third MR system 1500c (shown in Figure 15C-1) raises the HIPD 1542 to prepare for a swing in the first MR game environment 1520. The MR device 1532, responsive to the user 1502 raising the HIPD 1542, causes the MR representation of the user 1522 to perform a similar action (e.g., raise a virtual object, such as a virtual sword 1524). In some embodiments, each device uses respective sensor data and/or image data to detect the user input and provide an accurate representation of the user 1502's motion. For example, image sensors (e.g., SLAM cameras or other cameras) of the HIPD 1542 can be used to detect a position of the HIPD 1542 relative to the user 1502's body such that the virtual object can be positioned appropriately within the first MR game environment 1520; sensor data from the wrist-wearable device 1526 can be used to detect a velocity at which the user 1502 raises the HIPD 1542 such that the MR representation of the user 1522 and the virtual sword 1524 are synchronized with the user 1502's movements; and image sensors of the MR device 1532 can be used to represent the user 1502's body, boundary conditions, or real-world objects within the first MR game environment 1520.

In Figure 15C-2, the user 1502 performs a downward swing while holding the HIPD 1542. The user 1502's downward swing is detected by the wrist-wearable device 1526, the MR device 1532, and/or the HIPD 1542 and a corresponding action is performed in the first MR game environment 1520. In some embodiments, the data captured by each device is used to improve the user's experience within the MR environment. For example, sensor data of the wrist-wearable device 1526 can be used to determine a speed and/or force at which the downward swing is performed and image sensors of the HIPD 1542 and/or the MR device 1532 can be used to determine a location of the swing and how it should be represented in the first MR game environment 1520, which, in turn, can be used as inputs for the MR environment (e.g., game mechanics, which can use detected speed, force, locations, and/or aspects of the user 1502's actions to classify a user's inputs (e.g., user performs a light strike, hard strike, critical strike, glancing strike, miss) or calculate an output (e.g., amount of damage)).

Figure 15C-2 further illustrates that a portion of the physical environment is reconstructed and displayed at a display of the MR device 1532 while the MR game environment 1520 is being displayed. In this instance, a reconstruction of the physical environment 1546 is displayed in place of a portion of the MR game environment 1520 when object(s) in the physical environment are potentially in the path of the user (e.g., a collision with the user and an object in the physical environment are likely). Thus, this example MR game environment 1520 includes (i) an immersive VR portion 1548 (e.g., an environment that does not have a corollary counterpart in a nearby physical environment) and (ii) a reconstruction of the physical environment 1546 (e.g., table 1550 and cup 1552). While the example shown here is an MR environment that shows a reconstruction of the physical environment to avoid collisions, other uses of reconstructions of the physical environment can be used, such as defining features of the virtual environment based on the surrounding physical environment (e.g., a virtual column can be placed based on an object in the surrounding physical environment (e.g., a tree)).

While the wrist-wearable device 1526, the MR device 1532, and/or the HIPD 1542 are described as detecting user inputs, in some embodiments, user inputs are detected at a single device (with the single device being responsible for distributing signals to the other devices for performing the user input). For example, the HIPD 1542 can operate an application for generating the first MR game environment 1520 and provide the MR device 1532 with corresponding data for causing the presentation of the first MR game environment 1520, as well as detect the user 1502's movements (while holding the HIPD 1542) to cause the performance of corresponding actions within the first MR game environment 1520. Additionally or alternatively, in some embodiments, operational data (e.g., sensor data, image data, application data, device data, and/or other data) of one or more devices is provided to a single device (e.g., the HIPD 1542) to process the operational data and cause respective devices to perform an action associated with processed operational data.

In some embodiments, the user 1502 can wear a wrist-wearable device 1526, wear an MR device 1532, wear smart textile-based garments 1538 (e.g., wearable haptic gloves), and/or hold an HIPD 1542 device. In this embodiment, the wrist-wearable device 1526, the MR device 1532, and/or the smart textile-based garments 1538 are used to interact within an MR environment (e.g., any AR or MR system described above in reference to Figures 15A-15B). While the MR device 1532 presents a representation of an MR game (e.g., second MR game environment 1520) to the user 1502, the wrist-wearable device 1526, the MR device 1532, and/or the smart textile-based garments 1538 detect and coordinate one or more user inputs to allow the user 1502 to interact with the MR environment.

In some embodiments, the user 1502 can provide a user input via the wrist-wearable device 1526, an HIPD 1542, the MR device 1532, and/or the smart textile-based garments 1538 that causes an action in a corresponding MR environment. In some embodiments, each device uses respective sensor data and/or image data to detect the user input and provide an accurate representation of the user 1502's motion. While four different input devices are shown (e.g., a wrist-wearable device 1526, an MR device 1532, an HIPD 1542, and a smart textile-based garment 1538) each one of these input devices entirely on its own can provide inputs for fully interacting with the MR environment. For example, the wrist-wearable device can provide sufficient inputs on its own for interacting with the MR environment. In some embodiments, if multiple input devices are used (e.g., a wrist-wearable device and the smart textile-based garment 1538) sensor fusion can be utilized to ensure inputs are correct. While multiple input devices are described, it is understood that other input devices can be used in conjunction or on their own instead, such as but not limited to external motion-tracking cameras, other wearable devices fitted to different parts of a user, apparatuses that allow for a user to experience walking in an MR environment while remaining substantially stationary in the physical environment, etc.

As described above, the data captured by each device is used to improve the user's experience within the MR environment. Although not shown, the smart textile-based garments 1538 can be used in conjunction with an MR device and/or an HIPD 1542.

While some experiences are described as occurring on an AR device and other experiences are described as occurring on an MR device, one skilled in the art would appreciate that experiences can be ported over from an MR device to an AR device, and vice versa.

Some definitions of devices and components that can be included in some or all of the example devices discussed are defined here for ease of reference. A skilled artisan will appreciate that certain types of the components described may be more suitable for a particular set of devices, and less suitable for a different set of devices. But subsequent reference to the components defined here should be considered to be encompassed by the definitions provided.

In some embodiments example devices and systems, including electronic devices and systems, will be discussed. Such example devices and systems are not intended to be limiting, and one of skill in the art will understand that alternative devices and systems to the example devices and systems described herein may be used to perform the operations and construct the systems and devices that are described herein.

As described herein, an electronic device is a device that uses electrical energy to perform a specific function. It can be any physical object that contains electronic components such as transistors, resistors, capacitors, diodes, and integrated circuits. Examples of electronic devices include smartphones, laptops, digital cameras, televisions, gaming consoles, and music players, as well as the example electronic devices discussed herein. As described herein, an intermediary electronic device is a device that sits between two other electronic devices, and/or a subset of components of one or more electronic devices and facilitates communication, and/or data processing and/or data transfer between the respective electronic devices and/or electronic components.

The foregoing descriptions of Figures 15A-15C-2 provided above are intended to augment the description provided in reference to Figures 1-8. While terms in the following description may not be identical to terms used in the foregoing description, a person having ordinary skill in the art would understand these terms to have the same meaning.

Any data collection performed by the devices described herein and/or any devices configured to perform or cause the performance of the different embodiments described above in reference to any of the Figures, hereinafter the "devices," is done with user consent and in a manner that is consistent with all applicable privacy laws. Users are given options to allow the devices to collect data, as well as the option to limit or deny collection of data by the devices. A user is able to opt in or opt out of any data collection at any time. Further, users are given the option to request the removal of any collected data.

It will be understood that, although the terms "first," "second," etc. may be used herein to describe various elements, these elements should not be limited by these terms. These terms are only used to distinguish one element from another.

The terminology used herein is for the purpose of describing particular embodiments only and is not intended to be limiting of the claims. As used in the description of the embodiments and the appended claims, the singular forms "a," "an" and "the" are intended to include the plural forms as well, unless the context clearly indicates otherwise. It will also be understood that the term "and/or" as used herein refers to and encompasses any and all possible combinations of one or more of the associated listed items. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

As used herein, the term "if" can be construed to mean "when" or "upon" or "in response to determining" or "in accordance with a determination" or "in response to detecting," that a stated condition precedent is true, depending on the context. Similarly, the phrase "if it is determined [that a stated condition precedent is true]" or "if [a stated condition precedent is true]" or "when [a stated condition precedent is true]" can be construed to mean "upon determining" or "in response to determining" or "in accordance with a determination" or "upon detecting" or "in response to detecting" that the stated condition precedent is true, depending on the context.

The foregoing description, for purpose of explanation, has been described with reference to specific embodiments. However, the illustrative discussions above are not intended to be exhaustive or to limit the claims to the precise forms disclosed. Many modifications and variations are possible in view of the above teachings. The embodiments were chosen and described in order to best explain principles of operation and practical applications, to thereby enable others skilled in the art.

## Claims

1. A non-transitory computer-readable storage medium comprising executable instructions that, when executed by one or more processors communicatively coupled with a wrist-wearable device, cause the one or more processors to:
detect an invocation of an artificially intelligent (AI) agent, the invocation based on data associated with neuromuscular signals sensed by one or more biopotential sensors;
in response to detecting the invocation, cause a displayless head-wearable device to capture first image data using one or more cameras provided on the displayless head-wearable device, the first image data comprising a first real-world object;
provide the first image data to the Al agent;
present, at a display of the wrist-wearable device:
a representation of the first real-world object; and
a first dialogue message generated by the Al agent, the first dialogue message generated based on a first object type of the first real-world object and a selected set of pre-defined user-specific preferences associated with the first object type of the first real-world object;
detect a second invocation of the Al agent, the second invocation based on second data associated with neuromuscular signals sensed by the one or more biopotential sensors;
in response to detecting the second invocation, cause the displayless head-wearable device to capture second image data using the one or more cameras, the second image data comprising a second real-world object, distinct from the first real-world object;
provide the second image data to the Al agent;
present, at the display of the wrist-wearable device:
a representation of the second real-world object; and
a second dialogue message generated by the Al agent, the second dialogue message generated based on a second object type, distinct from the first object type, of the second real-world object and a second selected set of pre-defined user-specific preferences, distinct from the selected set of pre-defined user-specific preferences, associated with the second object type of the second real-world object.

2. The non-transitory computer-readable storage medium of claim 1, wherein the executable instructions, when executed, further cause the one or more processors to:
before providing the first image data to the Al agent, receive a user message from a user of the wrist-wearable device regarding the first real-world object;
provide the user message to the Al agent; and
wherein the first dialogue message is further generated based on the user message.

3. The non-transitory computer-readable storage medium of claim 2 and one or more of the following:
(i) wherein the user message modifies the selected set of pre-defined user-specific preferences;
(ii) wherein:
the user message comprises a request to identify the first real-world object; and
the first dialogue message comprises an identification of the first real-world object;
(iii) wherein:
the first image data further comprises a different real-world object, distinct from the first real-world object;
the user message comprises an indication that the user is interested in the different real-world object, not the first real-world object; and
the executable instructions, when executed, further cause the one or more processors to:
forgo presentation of the representation of the first real-world object and the first dialogue message;
present, at the display of the wrist-wearable device:
a representation of the different real-world object; and
a different dialogue message generated by the Al agent, the different dialogue message generated based on a different object type of the different real-world object and a different selected set of pre-defined user-specific preferences associated with the different object type of the different real-world object;
(iv) wherein:
the user message comprises an indication that the user is interested in an additional real-world object, distinct from the first real-world object, wherein the additional real-world object is not comprised in the first image data; and
the executable instructions, when executed, further cause the one or more processors to:
cause the displayless head-wearable device to capture additional image data using the one or more cameras provided on the displayless head-wearable device, the additional image data comprising the additional real-world object;
provide the additional image data to the Al agent;
present, at the display of the wrist-wearable device:
an additional representation of the additional real-world object; and
an additional dialogue message generated by the Al agent, the additional dialogue message generated based on an additional object type of the additional real-world object and an additional selected set of pre-defined user-specific preferences associated with the additional object type of the additional real-world object.

4. The non-transitory computer-readable storage medium of any preceding claim, wherein:
the representation of the first real-world object comprises an indication of the first object type; and
the executable instructions, when executed, further cause the one or more processors to:
after presenting the representation of the first real-world object and the first dialogue message on the display of the wrist-wearable device, receive a user input indicating that the first object type is incorrectly associated with the first real-world object;
present, at the display of the wrist-wearable device:
a revised representation of the first real-world object, distinct from the representation of the first real-world object; and
a revised dialogue message generated by the Al agent, the revised dialogue message generated based on a revised object type of the first real-world object, the revised object type distinct from the first object type, and a revised selected set of pre-defined user-specific preferences associated with the revised object type of the first real-world object.

5. The non-transitory computer-readable storage medium of any preceding claim, wherein:
the first dialogue message comprises a suggestion to perform a follow-up user input;
the executable instructions, when executed, further cause the one or more processors to:
receive a user input comprising the follow-up user input; and
perform a command based on the follow-up user input.

6. The non-transitory computer-readable storage medium of any preceding claim, wherein the executable instructions, when executed, further cause the one or more processors to:
detect a third invocation of the Al agent, the third invocation based on third data associated with neuromuscular signals sensed by the one or more biopotential sensors;
in response to detecting the third invocation, cause the displayless head-wearable device to capture third image data using the one or more cameras, the third image data comprising a third real-world object, distinct from the first real-world object and the second real-world object;
in accordance with the third real-world object being captured for a threshold amount of time:
provide the third image data to the Al agent;
present, at the display of the wrist-wearable device:
a representation of the third real-world object; and
a third dialogue message generated by the Al agent, the third dialogue message generated based on a third object type, distinct from the first object type and the second object type, of the third real-world object and a third selected set of pre-defined user-specific preferences associated with the third object type of the third real-world object.

7. The non-transitory computer-readable storage medium of any preceding claim, and one or more of the following:
(i) wherein the first dialogue message comprises an ordered list of messages, an order of the ordered list of messages determined by the Al agent, ordered based on a likelihood that a user of the wrist-wearable device selects messages of the ordered list of messages;
(ii) wherein the executable instructions, when executed, further cause the one or more processors to:
present, at the display of the wrist-wearable device, a visual representation of the selected set of pre-defined user-specific preferences.

8. The non-transitory computer-readable storage medium of any preceding claim and one or more of the following:
(i) wherein:
the displayless head-wearable device is a pair of displayless smart glasses; and
the wrist-wearable device is a smart watch;
(ii) wherein the one or more cameras capture a field of view of a user of the displayless head-wearable device.

9. A non-transitory computer-readable storage medium comprising executable instructions that, when executed by one or more processors communicatively coupled with a displayless head-wearable device, cause the one or more processors to:
in response to detecting an invocation of an artificially intelligent (AI) agent, the invocation based on data associated with neuromuscular signals sensed by one or more biopotential sensors, capture first image data using one or more cameras provided on the displayless head-wearable device, the first image data comprising a first real-world object;
provide the first image data, to the Al agent;
cause presentation of, at a display of a wrist-wearable device:
a representation of the first real-world object; and
a first dialogue message generated by the Al agent, the first dialogue message generated based on a first object type of the first real-world object and a selected set of pre-defined user-specific preferences associated with the first object type of the first real-world object;
in response to detecting a second invocation of the Al agent, the second invocation based on second data associated with neuromuscular signals sensed by the one or more biopotential sensors, capture second image data using the one or more cameras, the second image data comprising a second real-world object, distinct from the first real-world object;
provide the second image data to the Al agent;
cause presentation of, at the display of the wrist-wearable device:
a representation of the second real-world object; and
a second dialogue message generated by the Al agent, the second dialogue message generated based on a second object type, distinct from the first object type, of the second real-world object and a second selected set of pre-defined user-specific preferences associated with the second object type of the second real-world object.

10. The non-transitory computer-readable storage medium of claim 9, wherein the executable instructions, when executed, further cause the one or more processors to:
in response to detecting a third invocation of the Al agent, the invocation based on third data associated with neuromuscular signals sensed by the one or more biopotential sensors, capture third image data, the third image data comprising a third real-world object, distinct from the first real-world object and the second real-world object;
provide the third image data to the Al agent;
cause presentation of, at the display of the wrist-wearable device:
a representation of the third real-world object; and
a third dialogue message generated by the Al agent, the third dialogue message generated based on a third object type, distinct from the first object type and the second object type, of the third real-world object and a third selected set of pre-defined user-specific preferences associated with the third object type of the third real-world object.

11. The non-transitory computer-readable storage medium of claim 9 or claim 10, wherein the executable instructions, when executed, further cause the one or more processors to:
before providing the first image data to the Al agent, receive a user message regarding the first real-world object; and
provide the user message to the Al agent; and
wherein the first dialogue message is further generated based on the user message.

12. The non-transitory computer-readable storage medium of any one of claims 9 to 11, wherein:
the first dialogue message comprises a suggestion to perform a follow-up user input;
the executable instructions, when executed, further cause the one or more processors to:
receive a user input comprising the follow-up user input; and
perform a command based on the follow-up user input.

13. A method, comprising:
detecting an invocation of an artificially intelligent (AI) agent, the invocation based on data associated with neuromuscular signals sensed by one or more biopotential sensors;
causing capture of first image data using one or more cameras provided on a head-wearable device, the first image data comprising a first real-world object;
providing the first image data to the Al agent;
presenting, at a display of a wrist-wearable device:
a representation of the first real-world object; and
a first dialogue message generated by the Al agent, the first dialogue message generated based on a first object type of the first real-world object and a selected set of pre-defined user-specific preferences associated with the first object type of the first real-world object;
detecting a second invocation of the Al agent, the second invocation based on second data associated with neuromuscular signals sensed by the one or more biopotential sensors;
causing capture of second image data using the one or more cameras, the second image data comprising a second real-world object, distinct from the first real-world object;
providing the second image data to the Al agent;
presenting, at the display of the wrist-wearable device:
a representation of the second real-world object; and
a second dialogue message generated by the Al agent, the second dialogue message generated based on a second object type, distinct from the first object type, of the second real-world object and a second selected set of pre-defined user-specific preferences, distinct from the selected set of pre-defined user-specific preferences, associated with the second object type of the second real-world object.

14. The method of claim 13, wherein:
before providing the first image data to the Al agent, receiving a user message regarding the first real-world object; and
providing the user message to the Al agent; and
wherein the first dialogue message is further generated based on the user message.

15. The method of claim 13 or claim 14, further comprising:
detecting a third invocation of the Al agent, the invocation based on third data associated with neuromuscular signals sensed by the one or more biopotential sensors;
causing capture of third image data using the one or more cameras, the third image data comprising a third real-world object, distinct from the first real-world object and the second real-world object;
in accordance with the third real-world object being captured for a threshold amount of time:
providing the third image data to the Al agent;
presenting, at the display of the wrist-wearable device:
a representation of the third real-world object; and
a third dialogue message generated by the Al agent, the third dialogue message generated based on a third object type, distinct from the first object type and the second object type, of the third real-world object and a third selected set of pre-defined user-specific preferences associated with the third object type of the third real-world object.
